# EUROPEAN PATENT SPECIFICATION

(11) **EP 3 887 499 B1**
(45) Date of publication and mention of the grant of the patent: **31.07.2024**
(21) Application number: 19889516.1
(22) Date of filing: 08.11.2019
(51) Int. Cl.: B01L 3/00, B01L 9/00, G01N 21/05, G01N 21/64, G01N 21/76

(54) **FLOW CELL SYSTEMS AND METHODS RELATED TO SAME**
DURCHFLUSSZELLENSYSTEME UND ZUGEHÖRIGE VERFAHREN
SYSTÈMES DE CELLULES D'ÉCOULEMENT ET PROCÉDÉS ASSOCIÉS

(30) Priority: 26.11.2018 US 201862771194 P
(43) Date of publication of application: 06.10.2021
(73) Proprietor: Illumina, Inc., San Diego, CA 92122 (US)
(72) Inventor: RIVAL, Arnaud, San Diego, California 92122 (US); AGAH, Ali, San Diego, California 92122 (US); DEHLINGER, Dietrich, San Diego, California 92122 (US); FUNG, Tracy H., San Diego, California 92122 (US); CAI, Xiuyu, San Diego, California 92122 (US)
(74) Representative: Murgitroyd & Company
(86) International application number: PCT/US2019/060542
(87) International publication number: WO 2020/112327

(56) References cited:
- WO-A1-2015/089092
- WO-A1-2016/168996
- WO-A1-2017/123533
- WO-A1-2018/071467
- WO-A1-2018/200300
- US-A1- 2012 194 669
- US-A1- 2013 210 682

## Description

### BACKGROUND

Various protocols in biological and/or chemical research involve performing a large number of controlled reactions on local support surfaces or within predefined reaction chambers. The designated reactions may then be observed or detected and subsequent analysis may help identify or reveal properties of substances involved in the reaction. For example, in some multiplex assays, an unknown analyte having an identifiable label (e.g., fluorescent label) may be exposed to thousands of known probes under controlled conditions. Each known probe may be deposited into a corresponding well of a microplate. Observing any chemical reactions that occur between the known probes and the unknown analyte within the wells may help identify or reveal properties of the analyte. Other examples of such protocols include known DNA sequencing processes, such as sequencing-by-synthesis (SBS) or cyclic-array sequencing.

In some conventional fluorescent-detection protocols, an optical system is used to direct an excitation light onto fluorescently-labeled analytes and to also detect the fluorescent signals that may be emitted from the analytes. However, such optical systems can be relatively expensive and involve a relatively large benchtop footprint. For example, such optical systems may include an arrangement of lenses, filters, and light sources.

In other proposed detection systems, the controlled reactions occur on local support surfaces or within predefined reaction chambers of a flow cell that does not involve a large optical assembly to detect the fluorescent emissions. The flow cell includes an electronic solid-state light detector device or imager (e.g., a complementary metal-oxide-semiconductor (CMOS) light detector device or a charged-coupled device (CCD) light detector device) positioned adjacent (e.g., beneath) the support surfaces/chambers to detect light emissions from the reactions. However, such proposed solid-state imaging systems may have some limitations. For example, flow cells of such systems may be designed as single use consumable items. Accordingly, it may be beneficial for the flow cell to be a small and inexpensive device. It may therefore be beneficial to reduce the size of the flow cell, such as by reducing the package footprint size of the flow cell and/or the number and/or size of components of the package of the flow cell.

The following documents may be useful in understanding the invention. WO 2018/200300 A1 discloses sensors having integrated protection circuitry in which an example sensor includes a flow cell, a detection device, and a controller. The flow cell includes a passivation layer having opposed surfaces and a reaction site at a first of the opposed surfaces. The flow cell also includes a lid operatively connected to the passivation layer to partially define a flow channel between the lid and the reaction site. The detection device is in contact with a second of the opposed surfaces of the passivation layer, and includes an embedded metal layer that is electrically isolated from other detection circuitry of the detection device. The controller is to ground the embedded metal layer.

US 2012/0194669 A1 describes fluid sample analysis systems wherein a fluid sample analyzing system may be formed from an image sensor integrated circuit substrate. A glass wafer may be used to cover a wafer of image sensors. The glass wafer and the image sensor wafer may be attached using oxide bonding. Fluid channels may be formed in a layer that is interposed between the image sensor wafer and the glass wafer. The layer may be deposited on the image sensor wafer and the glass wafer prior to oxide bonding. A spacer may be used to deliver the fluid channel layer to the image sensor wafer before the glass wafer is bonded to the image sensor wafer. The spacer may be formed from a silicon wafer. The silicon wafer may be bonded to the image sensor wafer and thinned, leaving a thin spacer wafer layer on the image sensor wafer in which fluid channels may be formed.

US 2013/0210682 A1 describes a flow cell including inlet and outlet ports in fluid communication with each other through a flow channel that extends there between. The flow channel includes a diffuser region and a field region that is located downstream from the diffuser region. The field region of the flow channel directs fluid along reaction sites where desired reactions occur. The fluid flows through the diffuser region in a first flow direction and through the field region in a second flow direction. The first and second flow directions being substantially perpendicular.

### BRIEF DESCRIPTION

The invention is set out in the appended claims.

Examples or embodiments described herein which do not fall under the definition of the claims do not form part of the invention.

The objects, features and advantages of this disclosure will become apparent from the following detailed description of the various aspects of the disclosure taken in conjunction with the accompanying drawings.

### DRAWINGS

The features, aspects, and advantages of the present disclosure will become better understood when the following detailed description is read with reference to the accompanying drawings, which are not necessarily drawn to scale and in which like reference numerals represent like aspects throughout the drawings, wherein:
FIG. 1 illustrates, in one example, a cross-section of a socket for forming a flow cell system, in accordance with one or more aspects of the present disclosure.
FIG. 2 illustrates, in one example, an elevation perspective view of a manifold portion of the socket of FIG. 1 separated from a base portion thereof, in accordance with one or more aspects of the present disclosure.
FIG. 3 illustrates, in one example, a cross-section of a flow cell system comprising the socket of FIG. 1 and at least one flow cell device, in accordance with one or more aspects of the present disclosure.
FIG. 4 illustrates, in one example, a cross-section of a biosensor comprising a biosensor instrument and the flow cell system of FIG. 3, in accordance with one or more aspects of the present disclosure.
FIG. 5 illustrates, in one example, a cross-section of a plurality of wafer-level flow cell devices, in accordance with one or more aspects of the present disclosure.
FIG. 6 illustrates, in one example, a cross-section of a flow cell system comprising the socket of FIG. 1 and at least one flow cell device of FIG. 5, in accordance with one or more aspects of the present disclosure.
FIG. 7 illustrates, in one example, a cross-section of a plurality of wafer-level flow cell devices, in accordance with one or more aspects of the present disclosure.

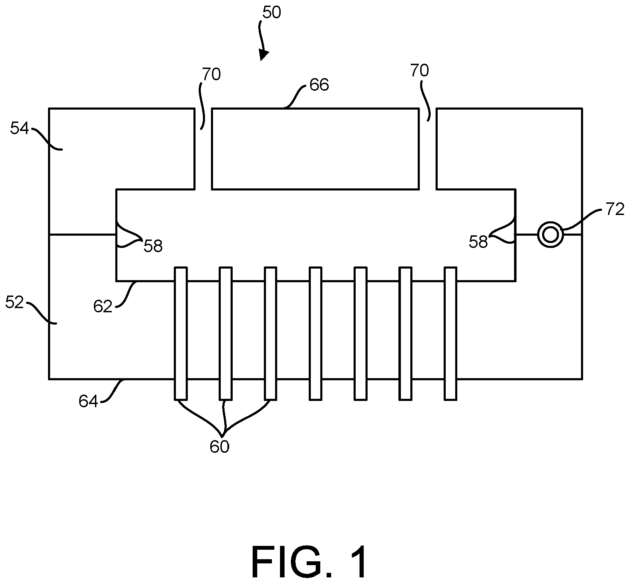

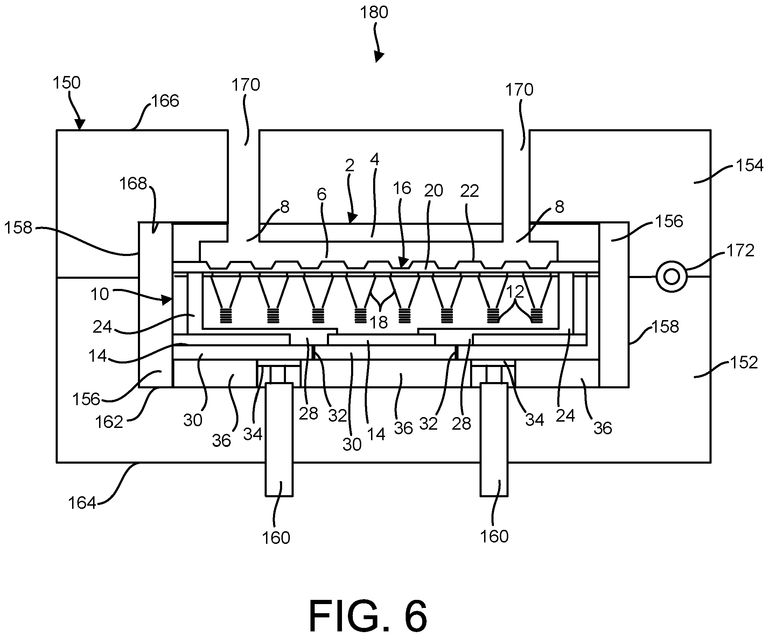

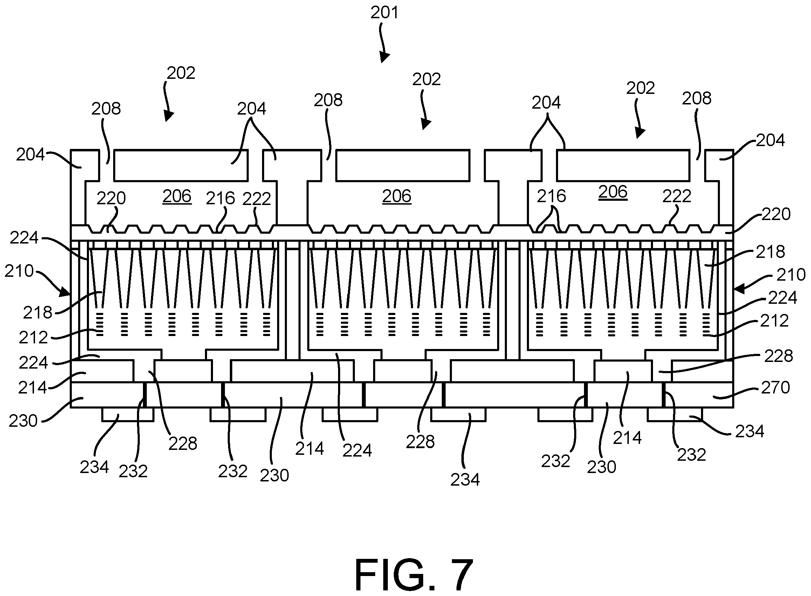

FIG. 6 illustrates, in one example, a cross-section of a flow cell system comprising the socket of FIG. 1 and at least one flow cell device of FIG. 7, in accordance with one or more aspects of the present disclosure.

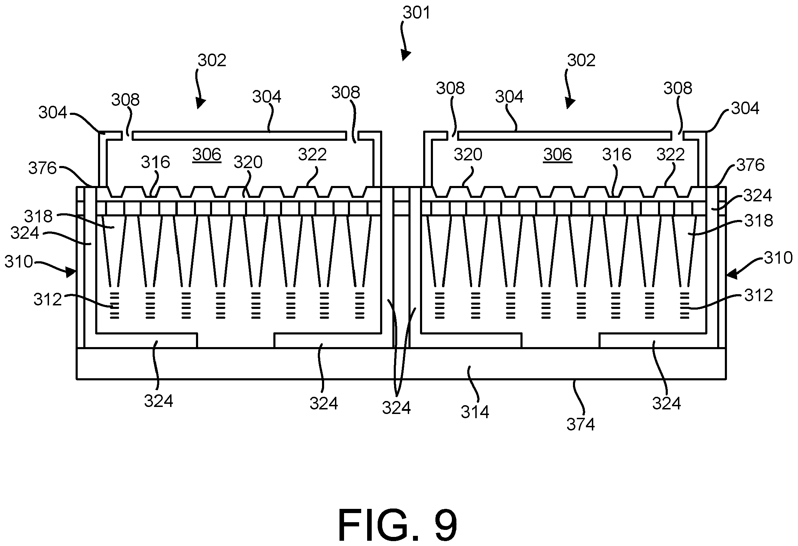

FIG. 9 illustrates, in one example, a cross-section of a plurality of wafer-level flow cell devices, in accordance with one or more aspects of the present disclosure.

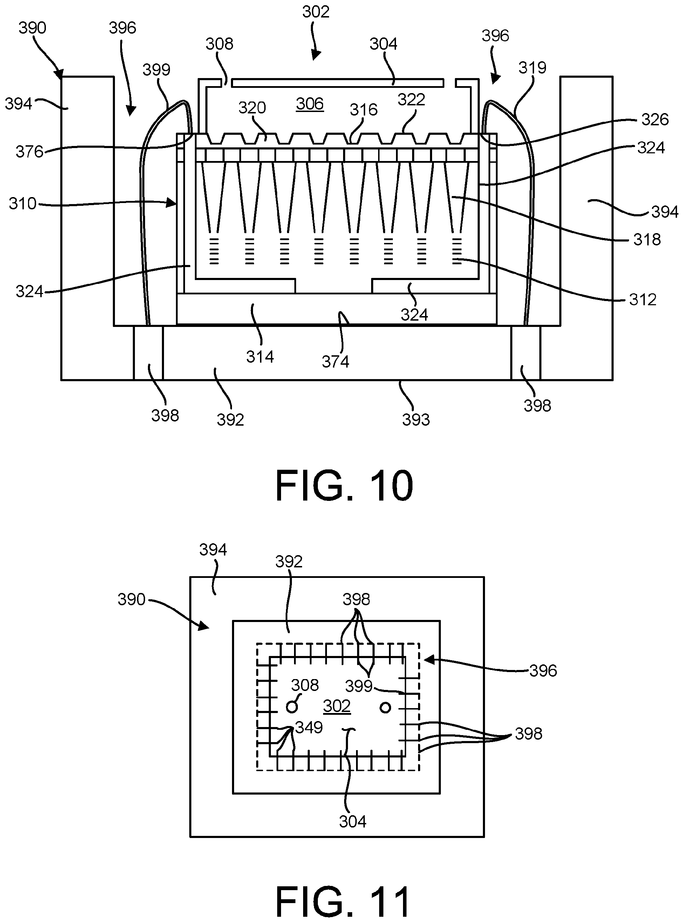

FIG. 10 illustrates, in one example, a cross-section of at least one flow cell device of FIG. 9 coupled to a flow cell device carrier, in accordance with one or more aspects of the present disclosure.
FIG. 11 illustrates, in one example, a top view of the at least one flow cell device and flow cell device carrier of FIG. 10, in accordance with one or more aspects of the present disclosure.

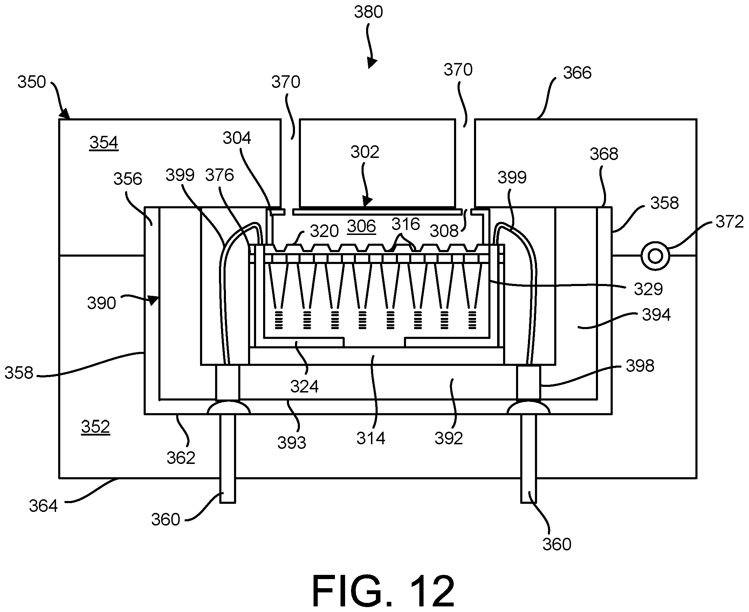

FIG. 12 illustrates, in one example, a cross-section of a flow cell system comprising the socket of FIG. 1 and the flow cell device and flow cell device carrier of FIG. 10, in accordance with one or more aspects of the present disclosure.

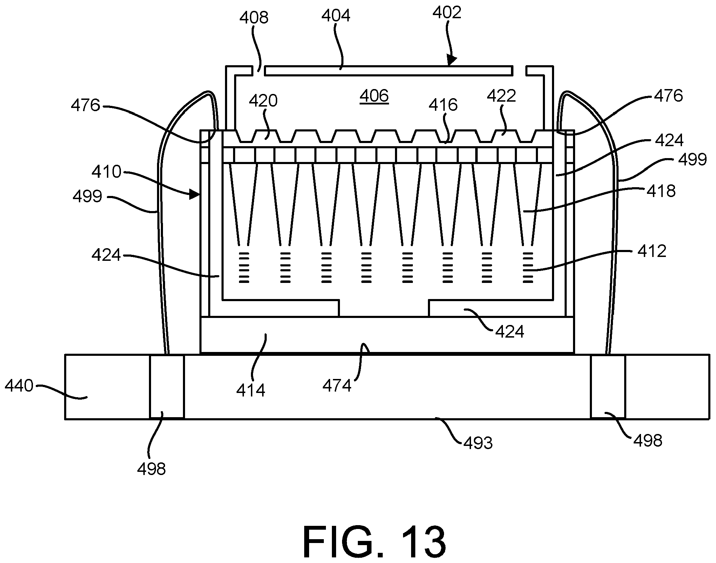

FIG. 13 illustrates, in one example, a cross-section of at least one flow cell device of FIG. 9 coupled to a printed circuit board, in accordance with one or more aspects of the present disclosure.

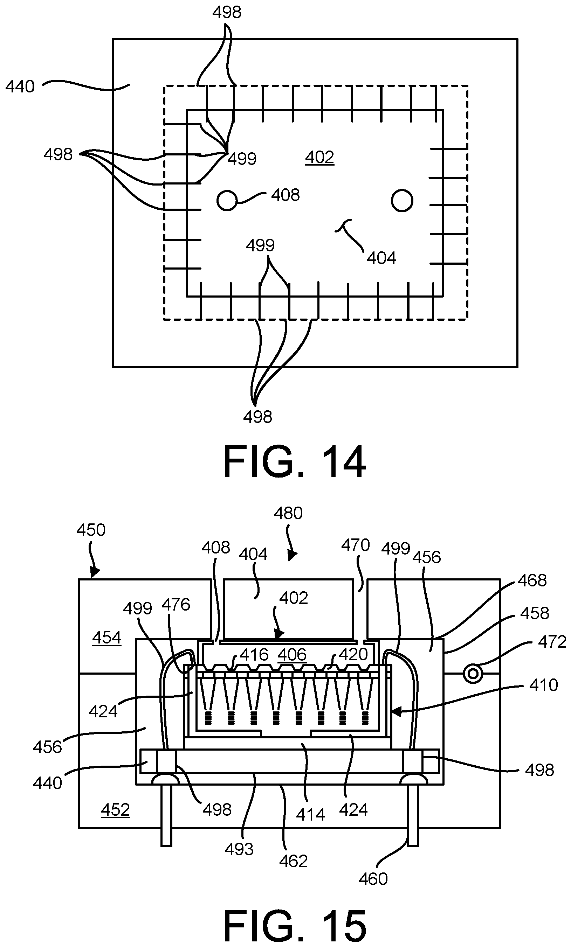

FIG. 14 illustrates, in one example, a top view of the at least one flow cell device and printed circuit board of FIG. 13, in accordance with one or more aspects of the present disclosure.
FIG. 15 illustrates, in one example, a cross-section of a flow cell system comprising the socket of FIG. 1 and the flow cell device and printed circuit board of FIG. 13, in accordance with one or more aspects of the present disclosure.

### DETAILED DESCRIPTION

Approximating language, as used herein throughout disclosure, may be applied to modify any quantitative representation that could permissibly vary without resulting in a change in the basic function to which it is related. Accordingly, a value modified by a term or terms, such as "terms "substantially", "approximately", "about", "relatively," or other such similar terms is not limited to the precise value specified, and is used to describe and account for small fluctuations, such as due to variations in processing, from a reference or parameter. Such small fluctuations include a zero fluctuation from the reference or parameter as well. For example, these terms can refer to less than or equal to ±5%, such as less than or equal to ±2%, such as less than or equal to ±1%, such as less than or equal to ±0.5%, such as less than or equal to ±0.2%, such as less than or equal to ±0.1%, such as less than or equal to ±0.05%. In some instances, the approximating language may correspond to the precision of an instrument for measuring the value.

Terminology used herein is for the purpose of describing particular examples only and is not intended to be limiting. As used herein, the singular forms "a", "an" and "the" are intended to include the plural forms as well, unless the context clearly indicates otherwise. Furthermore, references to "one example" are not intended to be interpreted as excluding the existence of additional examples that also incorporate the recited features. Moreover, unless explicitly stated to the contrary, the terms "comprising" (and any form of "comprise," such as "comprises" and "comprising"), "have" (and any form of "have," such as "has" and "having"), "include" (and any form of "include," such as "includes" and "including"), and "contain" (and any form of "contain," such as "contains" and "containing") are used as openended linking verbs. As a result, any examples that "comprises," "has," "includes" or "contains" one or more step or element possesses such one or more step or element, but is not limited to possessing only such one or more step or element. As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable or suitable. For example, in some circumstances, an event or capacity can be expected, while in other circumstances the event or capacity cannot occur - this distinction is captured by the terms "may" and "may be."

As used herein and unless otherwise indicated, the term "entirety" (and any other form of "entire") means at least a substantial portion, such as at least 95% or at least 99%. The term "entirety" (and any other form of "entire"), as used herein, is thereby not limited to 100%, unless otherwise indicated. As used herein, the term "layer" is not limited to a single continuous body of material unless otherwise noted. A "layer" may include multiple sublayers that may be the same or differing materials, and/or may include coatings, adhesives, and the like. Furthermore, one or more of the layers of the flow cells discoed herein (or sublayers) may be modified (e.g., etched, deposited with material, etc.) to provide the features described herein.

The terms "connect," "connected," "contact," "coupled" and/or the like are broadly defined herein to encompass a variety of divergent arrangements and assembly techniques. These arrangements and techniques include, but are not limited to (1) the direct joining of one component and another component with no intervening components therebetween (i.e., the components are in direct physical contact); and (2) the joining of one component and another component with one or more components therebetween, provided that the one component being "connected to," "contacting" or 'coupled to" the other component is somehow in operative communication (e.g., electrically, fluidly, physically, optically, etc.) with the other component (notwithstanding the presence of one or more additional components therebetween). It is to be understood that some components that are in direct physical contact with one another may or may not be in electrical contact and/or fluid contact with one another. Moreover, two components that are electrically connected, electrically coupled, optically connected, optically coupled, fluidly connected or fluidly coupled may or may not be in direct physical contact, and one or more other components may be positioned therebetween.

Flow cells described herein may be used in various biological and/or chemical processes and systems for academic or commercial analysis. More specifically, the flow cells described herein may be used in various processes and systems where it is desired to detect an event, property, quality, or characteristic that is indicative of a designated reaction. For example, flow cells described herein may include or be integrated with light detection devices, biosensors, and their components, as well as bioassay systems that operate with biosensors.

The flow cells may be configured to facilitate a plurality of designated reactions that may be detected individually or collectively. The flow cells may be configured to perform numerous cycles in which the plurality of designated reactions occurs in parallel. For example, the flow cells may be used to sequence a dense array of DNA features through iterative cycles of enzymatic manipulation and light or image detection/acquisition. The flow cells may be coupled in communication with one or more microfluidic channel that delivers reagents or other reaction components in a reaction solution to a reaction site of the flow cells. The reaction sites may be provided or spaced apart in a predetermined manner, such as in a uniform or repeating pattern. Alternatively, the reaction sites may be randomly distributed. Each of the reaction sites may be associated with one or more light guides and one or more light sensors that detect light from the associated reaction site. In some flow cells, the reaction sites may be located in reaction recesses or chambers, which may at least partially compartmentalize the designated reactions therein.

As used herein, a "designated reaction" includes a change in one or more of a chemical, electrical, physical, or optical property (or quality) of a chemical or biological substance of interest, such as an analyte-of-interest. In particular flow cells, a designated reaction is a positive binding event, such as incorporation of a fluorescently labeled biomolecule with an analyte-of-interest, for example. More generally, a designated reaction may be a chemical transformation, chemical change, or chemical interaction. A designated reaction may also be a change in electrical properties. In particular flow cells, a designated reaction includes the incorporation of a fluorescently-labeled molecule with an analyte. The analyte may be an oligonucleotide and the fluorescently-labeled molecule may be a nucleotide. A designated reaction may be detected when an excitation light is directed toward the oligonucleotide having the labeled nucleotide, and the fluorophore emits a detectable fluorescent signal. In alternative flow cells, the detected fluorescence is a result of chemiluminescence or bioluminescence. A designated reaction may also increase fluorescence (or Förster) resonance energy transfer (FRET), for example, by bringing a donor fluorophore in proximity to an acceptor fluorophore, decrease FRET by separating donor and acceptor fluorophores, increase fluorescence by separating a quencher from a fluorophore, or decrease fluorescence by co-locating a quencher and fluorophore.

As used herein, a "reaction solution," "reaction component" or "reactant" includes any substance that may be used to obtain one or more designated reactions. For example, potential reaction components include reagents, enzymes, samples, other biomolecules, and buffer solutions, for example. The reaction components may be delivered to a reaction site in the flow cells disclosed herein in a solution and/or immobilized at a reaction site. The reaction components may interact directly or indirectly with another substance, such as an analyte-of-interest immobilized at a reaction site of the flow cell.

As used herein, the term "reaction site" is a localized region where at least one designated reaction may occur. A reaction site may include support surfaces of a reaction structure or substrate where a substance may be immobilized thereon. For example, a reaction site may include a surface of a reaction structure (which may be positioned in a channel of a flow cell) that has a reaction component thereon, such as a colony of nucleic acids thereon. In some flow cells, the nucleic acids in the colony have the same sequence, being for example, clonal copies of a single stranded or double stranded template. However, in some flow cells a reaction site may contain only a single nucleic acid molecule, for example, in a single stranded or double stranded form.

A plurality of reaction sites may be randomly distributed along the reaction structure of the flow cells, or may be arranged in a predetermined manner (e.g., side-by-side in a matrix, such as in microarrays). A reaction site can also include a reaction chamber or recess that at least partially defines a spatial region or volume configured to compartmentalize the designated reaction. As used herein, the term "reaction chamber" or "reaction recess" includes a defined spatial region of the support structure (which is often in fluid communication with a flow channel). A reaction recess may be at least partially separated from the surrounding environment or other spatial regions. For example, a plurality of reaction recesses may be separated from each other by shared walls. As a more specific example, the reaction recesses may be nanowells formed by an indent, pit, well, groove, cavity or depression defined by interior surfaces of a detection surface and have an opening or aperture (i.e., be open-sided) so that the nanowells can be in fluid communication with a flow channel.

In some flow cells, the reaction recesses of the reaction structure of the flow cells are sized and shaped relative to solids (including semi-solids) so that the solids may be inserted, fully or partially, therein. For example, the reaction recesses may be sized and shaped to accommodate a capture bead. The capture bead may have clonally amplified DNA or other substances thereon. Alternatively, the reaction recesses may be sized and shaped to receive an approximate number of beads or solid substrates. As another example, the reaction recesses may be filled with a porous gel or substance that is configured to control diffusion or filter fluids that may flow into the reaction recesses.

Light sensors (e.g., photodiodes) of one or more light detection devices of the flow cells may be associated with corresponding reaction sites. A light sensor that is associated with a reaction site detects light emissions from the associated reaction site via at least one light guide when a designated reaction has occurred at the associated reaction site. In some flow cells, a plurality of light sensors (e.g., several pixels of a light detection or camera device) may be associated with a single reaction site. In other flow cells, a single light sensor (e.g. a single pixel) may be associated with a single reaction site or with a group of reaction sites. The light sensor, the reaction site, and other features of the flow cells may be configured so that at least some of the light is directly detected by the light sensor without being reflected.

As used herein, a "biological and/or chemical substance" includes biomolecules, samples-of-interest, analytes-of-interest, and other chemical compound(s). A biological and/or chemical substance may be used to detect, identify, or analyze other chemical compound(s), or function as intermediaries to study or analyze other chemical compound(s). In particular flow cells, the biological and/or chemical substances include a biomolecule. As used herein, a "biomolecule" includes one or more of a biopolymer, nucleoside, nucleic acid, polynucleotide, oligonucleotide, protein, enzyme, polypeptide, antibody, antigen, ligand, receptor, polysaccharide, carbohydrate, polyphosphate, cell, tissue, organism, or fragment thereof or any other biologically active chemical compound(s) such as analogs or mimetics of the aforementioned species. In a further example, a biological and/or chemical substance or a biomolecule includes an enzyme or reagent used in a coupled reaction to detect the product of another reaction such as an enzyme or reagent, such as an enzyme or reagent used to detect pyrophosphate in a pyrosequencing reaction.

Biomolecules, samples, and biological and/or chemical substances may be naturally occurring or synthetic and may be suspended in a solution or mixture within a reaction recess or region. Biomolecules, samples, and biological and/or chemical substances may also be bound to a solid phase or gel material. Biomolecules, samples, and biological and/or chemical substances may also include a pharmaceutical composition. In some cases, biomolecules, samples, and biological and/or chemical substances of interest may be referred to as targets, probes, or analytes.

As used herein, a "flow cell" includes a device that includes a lid extending over a reaction structure that cooperatively form at least one flow channel therebetween that is in communication with a plurality of reaction sites of the reaction structure, and includes at least one light detection device that is configured to detect designated reactions that occur at or proximate to the reaction sites. A flow cell may include a solid-state light detection or "imaging" device (e.g., CCD, CMOS light detection device, etc.). As one specific example, a flow cell may be configured to fluidically and electrically couple to a biosensor cartridge with an integrated pump, which may be configured to fluidically and/or electrically couple to a bioassay system. A biosensor and/or bioassay system may deliver a reaction solution to reaction sites of a flow cell according to a predetermined protocol (e.g., sequencing-by-synthesis), and perform a plurality of imaging events. For example, a biosensor and/or bioassay system may direct one or more reaction solutions through the flow channel of the flow cell, and thereby along the reaction sites. One or more of the reaction solutions may include four types of nucleotides having the same or different fluorescent labels. The nucleotides may bind to the reaction sites of the flow cell, such as to corresponding oligonucleotides at the reaction sites. The biosensor and/or bioassay system may then illuminate the reaction sites using an excitation light source (e.g., solid-state light sources, such as light-emitting diodes (LEDs)). The excitation light may have a predetermined wavelength or wavelengths, including a range of wavelengths. The fluorescent labels excited by the incident excitation light may provide emission signals (e.g., light of a wavelength or wavelengths that differ from the excitation light and, potentially, each other) that may be detected by the light sensors of the flow cell.

As used herein, the term "immobilized," when used with respect to a biomolecule or biological and/or chemical substance, includes attaching the biomolecule or biological and/or chemical substance at a molecular level to a surface, such as to a detection surface of a reaction structure over the light detection device of the flow cell. For example, a biomolecule or biological and/or chemical substance may be immobilized to a detection surface of the reaction structure of the flow cell using adsorption techniques including non-covalent interactions (e.g., electrostatic forces, van der Waals, and dehydration of hydrophobic interfaces) and covalent binding techniques where functional groups or linkers facilitate attaching the biomolecules to the detection surface. Immobilizing biomolecules or biological and/or chemical substances to the detection surface of the reaction structure of the flow cell may be based upon the properties of the surface, the liquid medium carrying the biomolecule or biological and/or chemical substance, and the properties of the biomolecules or biological and/or chemical substances themselves. In some cases, the detection surface may be functionalized (e.g., chemically or physically modified) to facilitate immobilizing the biomolecules (or biological and/or chemical substances) thereto.

In some examples, nucleic acids can be immobilized to the reaction structure of the flow cell, such as to surfaces of reaction recesses or nanowells thereof. Natural nucleotides and enzymes that are configured to interact with the natural nucleotides maybe utilized. Natural nucleotides include, for example, ribonucleotides or deoxyribonucleotides. Natural nucleotides can be in the mono-, di-, or tri-phosphate form and can have a base selected from adenine (A), Thymine (T), uracil (U), guanine (G) or cytosine (C). It will be understood, however, that non-natural nucleotides, modified nucleotides or analogs of the aforementioned nucleotides can be utilized.

As noted above, a biomolecule or biological and/or chemical substance may be immobilized at a reaction site in a nanowell of a reaction structure of the flow cell. Such a biomolecule or biological substance may be physically held or immobilized within the reaction recesses through an interference fit, adhesion, covalent bond, or entrapment. Items or solids may be disposed within the reaction recesses, such as include polymer beads, pellets, agarose gel, powders, quantum dots, or other solids that may be compressed and/or held within the nanowell. In certain implementations, the nanowells may be coated or filled with a hydrogel layer capable of covalently binding DNA oligonucleotides. A nucleic acid superstructure, such as a DNA ball, can be disposed in or at a nanowell, for example, by attachment to an interior surface of the nanowells or by residence in a liquid within the nanowells. A DNA ball or other nucleic acid superstructure can be performed and then disposed in or at a nanowell. Alternatively, a DNA ball can be synthesized in situ at a nanowell. A substance that is immobilized in a nanowell can be in a solid, liquid, or gaseous state.

The disclosed flow cells may be configured for biological and/or chemical analysis to obtain any information or data that relates thereto. Particular flow cells may comprise part of a nucleic acid sequencing system (or sequencer) configured for various applications, including but not limited to de novo sequencing, resequencing of whole genomes or target genomic regions, and metagenomics. The sequencing system may be configured to perform DNA or RNA analysis. The flow cells may be configured to perform a large number of parallel reactions on the active surface thereof to obtain information relating to the reactions.

The flow cells may include one or more flow channels that direct a solution to or toward reaction sites on the active area/surface of the reaction structure over one or more light detection devices, as explained further below. In use, the flow cells may thereby be in fluid communication with a fluid storage system (not shown) that may store various reaction components or reactants that are used to conduct the designated reactions in the flow cell, for example. The fluid storage system may also store fluids for washing or cleaning the or more flow channel of the flow cell and/or for diluting the reactants. For example, the fluid storage system may include various reservoirs to store samples, reagents, enzymes, other biomolecules, buffer solutions, aqueous, and non-polar solutions, and the like. Furthermore, the fluid storage system may also include waste reservoirs for receiving waste products from the flow cell.

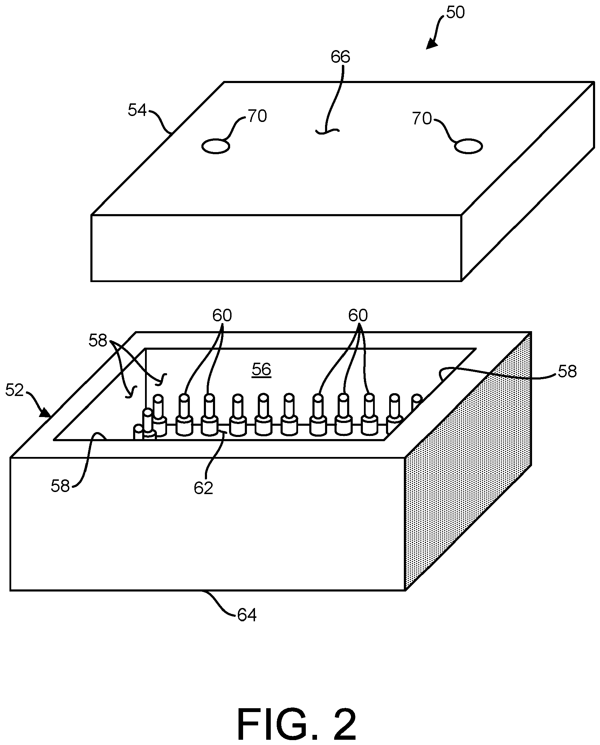

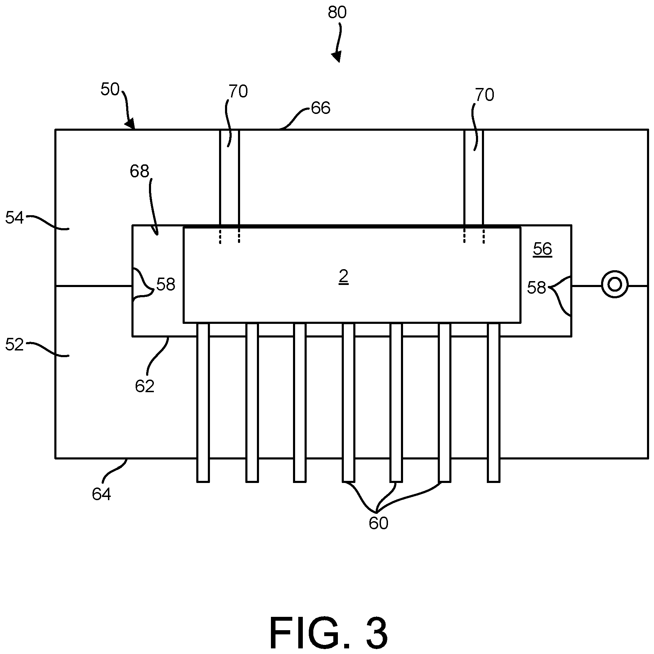

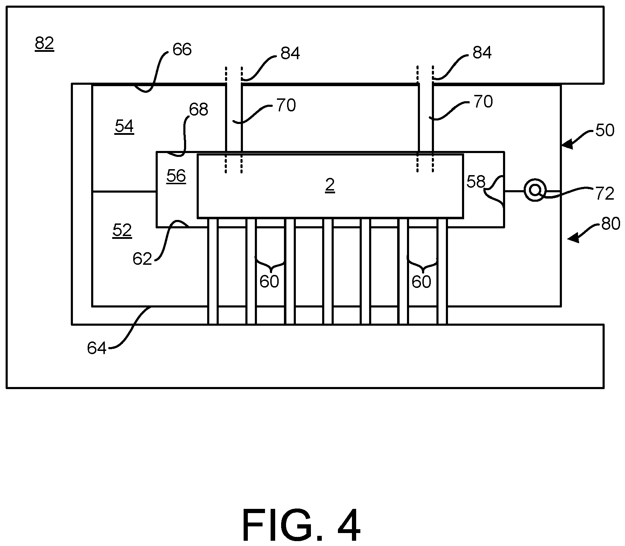

FIGS. 1-4 illustrate an example of a socket 50 that may be utilized to form a flow cell system 80 in accordance with one or more aspects of the present disclosure. As shown in FIGS. 1-4, the socket 50 may comprise a base portion 52 and a cover portion 54 that cooperate to form an internal enclosure 56. The enclosure 56 may be a wholly enclosed cavity (or three-dimensional area/space) as shown in FIGS. 1-4, or may be a partially enclosed (i.e., partially open) cavity (or three-dimensional area/space). The enclosure 56 is configured to house at least one flow cell 2 therein, as shown in FIGS. 3 and 4. In some examples, a single flow cell 2 may be positioned (and potentially secured) within the enclosure 56. In some other examples, a plurality of flow cells 2 may be positioned (and potentially secured) within the enclosure 56.

The base portion 52 may include an exterior bottom surface 64 an interior bottom surface 62 opposing the exterior bottom surface 64. The interior bottom surface 62 may form a bottom boundary of the enclosure 56. In some examples, the base portion 52 may further include a plurality of opposing interior side walls 58 that extend upwardly from the interior bottom surface 62, as shown in FIGS. 1-4. The interior side walls 58 of the base portion 52 may be coupled to each other and arranged to form at least a portion of lateral sides/boundaries of the enclosure 56. The base portion 52 may comprise two or more separate and distant components that are coupled together, or may be of one-piece construction. The base portion 52 may be electrically non-conductive. For example, the base portion 52 may comprise an electrically non-conductive and/or semiconductor material, such as polymer (e.g., a thin film polymer), glass, silicon, silica, quartz, fiberglass, epoxy, ceramic or a combination thereof.

As shown in FIGS. 1-4, the socket 80 may include plurality of electrical contacts 60 extending through the base portion 52 from the interior bottom surface 62 to the exterior bottom surface 64. The electrical contacts 60 may extend from the interior bottom surface 62 (e.g., upwardly) and into the area of the enclosure 56, as shown in FIGS. 1-4. The electrical contacts 60 are electively conductive so to be able to transmit/conduct electrical data signals to and from circuitry of at least one light detection device of a flow cell 2 when the flow cell 2 is positioned within the enclosure 56 and the base portion 52 and the top cover portion 54 are in engagement, as shown in FIGS. 3 and 4 and described further below. The electrical contacts 60 may thereby comprise an electrically conductive material, such as a metal material (e.g., Cu (copper), Au (gold) W (tungsten), Al (aluminum) or a combination thereof), but it is understood that other electrically conductive materials may be utilized.

The electrical contacts 60 may comprise any configuration that is effective to electrically couple (e.g., contact or directly abut) with the circuitry of the at least one light detection device of the flow cell 2. For example, the electrical contacts 60 may comprise leads, static pins, pogo pins (or other dynamic pins or leads), balls (e.g., solder balls), bare lands, one or more conductive film (e.g., an anisotropic conductive film), or any other configuration that provides for surface mounting of the flow cell 2 on the electrical contacts 60 within the enclosure 56. The electrical contacts 60 may be arranged in an array that corresponds or is compatible with one or more flow cells 2 such that the electrical contacts 60 electrically couple with the circuitry of the flow cells 2 when at least one of the flow cells 2 is positioned within the enclosure 56 and the base portion 52 and the top cover portion 54 are in engagement, as shown in FIGS. 3 and 4.

The electrical contacts 60 may be exposed or otherwise accessible at the exterior bottom surface 64 of the base portion 52 of the socket 80, as shown in FIGS. 1-4. The socket 80 may thereby cooperate (e.g., couple) with an instrument 82 such that the electrical contacts 60 are electrically coupled (e.g., physically engages) with corresponding contacts of the instrument 82, as shown in FIG. 4. The instrument 82 can thereby receive the electrical data signals from the circuitry of at least one light detection device of the flow cell 2 positioned within the enclosure 56 of the socket 80 (and transmitted/conducted by the electrical contacts 60). In some examples, the instrument 82 may also transmit electrical signals to the flow cell 2 via the electrical contacts 60 (e.g., to control operation of the flow cell 2, such as operation of the at least one light detection device thereof, for example). In some examples, the instrument 82 may comprise a biosensor, bioassay system, cartridge, workstation or any other instruments that physically and electrically couples with the socket 80 and is configured to receive and/or transmit data signals from/to the circuitry of the at least one light detection device of the flow cell 2 positioned within the enclosure 56 of the socket 80.

The cover portion 54 may include an exterior top surface 66 an interior top surface 68 opposing the exterior top surface 66, as shown in FIGS. 1-4. The interior top surface 68 may form a top boundary of the enclosure 56. In some examples, the cover portion 54 may further include a plurality of opposing interior side walls 58 that extend from the interior top surface 68 (e.g., downwardly), as shown in FIGS. 1-4. The interior side walls 58 of the cover portion 54 may be coupled to each other and arranged to form at least a portion of lateral sides/boundaries of the enclosure 56. As shown in FIGS. 1-4, the cover portion 54 may include at least one port 70 extending through the cover portion 54 from the exterior top surface 66 to the interior top surface 68 and in communication with the enclosure 56. The at least one port 70 may include a passageway extending from the exterior top surface 66 to the interior top surface 68 such that the passageway extends through the cover portion 54 and to the enclosure 56 (i.e., in communication with the enclosure 56). In some examples, the cover portion 54 may include at least two ports 70 in communication with the enclosure 56, as shown in FIGS. 1-4. In some examples, the diameter of the at least one port 70 may be about 750µm; however, the at least one port 70 may be of any size and any shape. The cover portion 54 may comprise two or more separate and distant components that are coupled together, or may be of one-piece construction.

The cover portion 54 may be configured such that the at least one port 70 thereof is in communication (e.g., at least partially aligned and engaged) with at least one corresponding port of the flow cell 2 positioned within the enclosure 56, as shown in FIGS. 3 and 4. As shown in FIG. 4, the cover portion 54 may also be configured such that the at least one port 70 thereof is in communication (e.g., at least partially aligned and engaged) with at least one corresponding port 84 of the instrument 82. For example, the instrument 82 may provide a flow of a reaction solution or another biological and/or chemical fluid or solution to, and potentially through, the flow cell 2 via the at least one port 84 thereof and the at least one port 84 of the instrument 82. The cover portion 54 may thereby function as a manifold.

In some examples, the instrument 82 may provide a flow of reaction solution to the flow cell 2 within the enclosure 56 of the socket 50 that reacts with a biological and/or chemical substance immobilized within the flow cell 2 to form reaction sites. When illuminated through a lid of the flow cell 2, the light detection device of the flow cell is able to sense the chemical reactions of the reaction sites via light emitted therefrom (in response to the illumination light) and produce electrical data signals to the circuity thereof in response thereto. The signals may be conducted through the circuitry of the light detection devices of the flow cell and to the instrument 82 via the electrical contacts 60 of the socket 50. At least a portion of the cover portion 54 may thereby comprise a material that is transparent to the excitation light to allow light that emanates from exterior of the socket 50 (e.g., above the cover portion 54) to propagate into the flow cell 2 within the enclosure 56. In some examples, at least a portion of the cover portion 54 may comprise a material that is optically transparent to at least the excitation light and has low or no autofluorescence, such as, but not limited to, cyclic olefin copolymer (COC). In some examples, the cover portion 54 may comprise an electrically non-conductive and/or semiconductor material, such as polymer (e.g., a thin film polymer), glass, silicon, silica, quartz, fiberglass, epoxy, ceramic or a combination thereof. The cover portion 54 may comprise two or more separate and distant components that are coupled together, or may be of one-piece construction.

As shown in FIGS. 3 and 4, the socket 50 may be configured such that the cover portion 54 and the base portion 52 mate/engage to cooperatively form the enclosure 56 such that the flow cell 2 is securely trapped (i.e., held/secured) within the enclosure 56. For example, the socket 50 may be configured such that the interior top surface 68 of the cover portion 54 engages a top surface or portion of the flow cell 2, and the interior bottom surface 62 of the base portion 52 and/or the electrical contacts 60 engage a bottom surface or portion of the flow cell 2. In some examples, the cover portion 54 and the base portion 52 and/or the electrical contacts 60 apply a compressive force to the flow cell 2 to securely maintain the flow cell 2 in a static location and orientation within the enclosure 56. In some examples, the flow cell 2 may be removably physically coupled within the enclosure 65 (e.g., via the cover portion 54 and the base portion 52 and/or the electrical contacts 60) and not chemically bonded or adhered to one or more aspects of the socket 50.

In some examples, the flow cell 2 may define a smaller lateral size (i.e., footprint) than that of the enclosure 56. As shown in FIGS. 3 and 4, at least a portion of the lateral side surfaces of the flow cell 2 that extend between the top surface of the lid 6 and the support layer 30 may be spaced from the inner side walls 58 of the base portion 62 and/or the cover portion 54 when the flow cell 2 is contained within the enclosure 56 such that an open/unoccupied portion of the enclosure 56 extends therebetween. In some examples, the entirety of the lateral side surfaces of the flow cell 2 are spaced from the inner side walls 58 of the base portion 62 and/or the cover portion 54 such that an open portion of the enclosure 56 extends therebetween. The flow cell 2 and the enclosure 56 may thereby be configured (e.g., sized and shaped) such that an open portion of the enclosure 56 extends about the periphery (at least partially) of the flow cell 2, and thus between the flow cell 2 and the side walls 58 of the base portion 62 and/or the cover portion 54 of the enclosure 56.

The flow cell 2 may be removably coupled/maintained within the enclosure via engagement of the cover portion 54 and the base portion 52, as shown in FIGS. 3 and 4. In one such example, the flow cell 2 may only be maintained within the enclosure 56 via pressure and/or contact of interior surfaces of the cover portion 54 and the base portion 52 of the socket 50. The cover portion 54 and the base portion 52 may be removably coupled together such that decoupling of the cover portion 54 and the base portion 52 allows for removal of the flow cell 2 (and, potentially, reuse of the socket 60 with the removed flow cell 2 at a later time or reuse of the socket 60 with a differing flow cell). As shown in FIGS. 1, 3 and 4, in one example the cover portion 54 and the base portion 52 of the socket 50 may be mechanically coupled by a mechanism 72 that allows for selective relative movement between the cover portion 54 and the base portion 52, such as a hinge. For example, the cover portion 54 may repositionable between an "open" orientation and/or position with respect to the base portion 52 such at least a portion of the cover portion 54 is spaced from the base portion 52 and the enclosure 56 is accessible to allow the flow cell 2 to be positioned on/over the base portion 52 within the enclosure 56, and a "closed" orientation and/or position with respect to the base portion 52 such that the cover portion 54 is moved into engagement with the base portion 52 and the flow cell 2 is trapped and/or compressed by the cover portion 54 and the base portion 52 (and/or the electrical contacts 60) within the enclosure 56. However, the cover portion 54 and the base portion 52 may be movably and/or removably coupled to each other via any mechanism. In some other examples, the cover portion 54 and the base portion 52 may be fixedly coupled to each other via any mechanism. For example, the cover portion 54 and the base portion 52 may be coupled together (movably coupled or removably coupled) via one or more of a gasket, screw, nut, pin, rivet, elastic member, latch, hook, clamp, clip, cam, ball detent, hinge, adhesive, weld/braze, a combination thereof or any other fastening mechanism or technique.

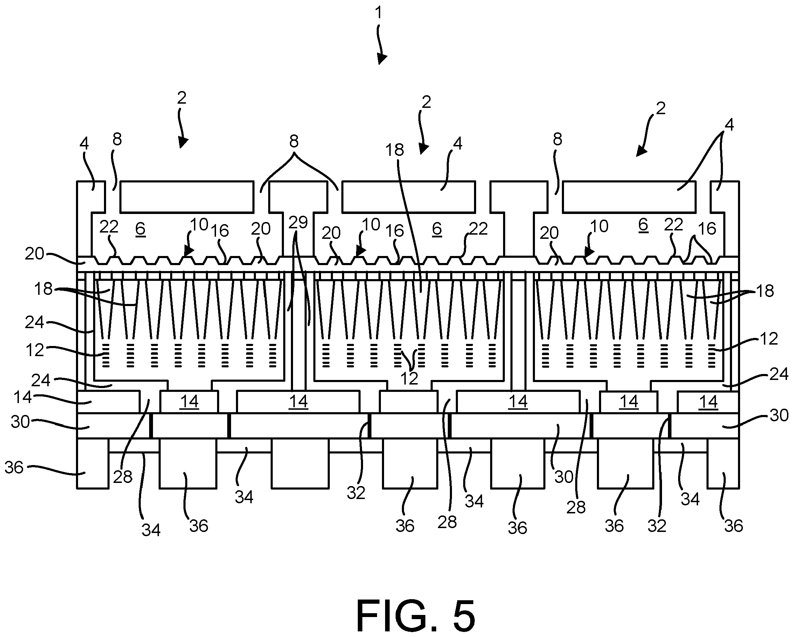

FIG. 5 illustrates one example of a wafer level flow cell structure 1 in accordance with one or more aspects of the present disclosure. The wafer level flow cell structure 1 comprises a plurality of integral flow cells 2 each including at least one light detection device 10 and a lid 4 extending over the light detection device 10. One or more flow cell 2 of the wafer level flow cell structure 1 may be physically separated (e.g., diced) from one or more other flow cell 2 of the wafer level flow cell structure 1 and utilized with a socket, such as socket 50 described above, to form a flow cell system according to the present disclosure. The light detection devices 10 of the wafer level flow cell structure 1 may be integral (e.g., integral wafer level detection devices 10). For example, the light detection devices 10 of the wafer level flow cell structure 1 may each include a portion of a common base wafer portion 14 (i.e., the flow cells 2 of the wafer level flow cell structure 1 may be wafer level flow cells 2, and/or the light detection devices 10 of the wafer level flow cell structure 1 may be wafer level light detection devices 10).

The lid 4 may form a flow channel 6 between an inner side/surface of the lid 4 and a top reaction/detector surface 22 of each light detection device 10. A flow channel 6 formed via the lid 4 may extend over the detector surface 22 of a single light detection device or over the detector surfaces 22 of a plurality of adjacent light detection devices 10. The light detection devices 10 may comprise a plurality of stacked layers, such as the common base layer portion 14 (e.g., wafer portion) and a plurality of dielectric layers and metal-dielectric layers positioned thereover, as described above. As shown in FIG. 5, the light detection devices 10 may be semiconductor light detection devices, and each light detection device 10 may include a sensor array of light sensors 12 and a guide array of light guides 18.

The light detection devices 10 may be manufactured using integrated circuit manufacturing processes, such as processes used to manufacture charged-coupled devices circuits (CCD) or complementary-metal-oxide semiconductor (CMOS) devices or circuits. The light detection devices 10 may thereby include, for example, one or more semiconductor materials, and may take the form of, for example, CMOS light detection devices (e.g., a CMOS image sensor) or a CCD image sensor, another type of image sensor. In the present example, the light detection devices 10 comprise CMOS type image sensors as shown in FIG. 5, but other types of sensors may be used. For example, as shown in FIG. 5, the light detection devices 10 may be semiconductor based, and comprise a plurality of stacked dielectric and metal layers.

When configured as CMOS-type light detection devices 10, the "complementary" aspect refers to the inclusion of both n-type and p-type metal-oxide semiconductor field effect transistors (MOSFETs) in integrated circuits (ICs) fabricated using CMOS technology. Each MOSFET has a metal gate with a gate dielectric, such as an oxide (hence, the "Metal-Oxide" part of the name) and a semiconductor material below the gate (corresponds to "Semiconductor" in the name). When the light detection devices 10 are configured as shown in FIG. 5, the light sensors 12 may be electrically coupled to the circuitry 24 through the gates, for example.

As a semiconductor based light detection device 10, at least some of the circuitry 24 may be provided within device substrate/layers (e.g., dielectric layers), through/into which the lights guides 18 may each extend. Each of the substrate layers may include interconnected conductive elements that form at least part of the device circuitry 24, with dielectric material adjacent (e.g., surrounding) to the conductive elements/circuitry 24. The conductive elements/circuitry 24 may thereby be embedded within dielectric material. The lights guides 18 may also extend through the dielectric material and may be spaced from the circuitry 24. Various metallic elements and/or dielectric materials may be utilized, such as those suitable for integrated circuit manufacturing (e.g., CMOS manufacturing). For example, the conductive elements/circuity 24 may be metallic elements, such as gold, tungsten, copper, aluminum or a combination thereof, but it is understood that other materials and configurations may be utilized. The dielectric material may be a low-k material and/or a silicon-containing material, such as SiO2, but it is understood that other dielectric materials and configurations may be utilized.

The light detection devices 10 may also include a reaction structure 20 extending along a top portion thereof, including over openings of the light guides 18, as shown in FIG. 5. The light detection devices 10 may be configured such that each light sensor 12 corresponds/aligns with a single light guide 18 and/or a single reaction recess 16 (e.g., a single nanowell) of a reaction structure 20 positioned over the top surface of the light detection device 10, such that it receives photons only therefrom. However, in other examples, a single light sensor 12 may receive photons through more than one light guide 18 and/or from more than one reaction recess 16 (e.g., from more than one nanowell). A single light sensor 12 may thereby form one pixel or more than one pixel. As shown in FIG. 5, the reaction recesses 16 may be defined by, for example, an indent/change in depth (or thickness) in the top surface of the reaction structure 20.

As shown in FIG. 5, the array of light guides 18 and reaction recesses 16 of the reaction structure 20 (and potentially light sensors 12) may be provided in a defined repeating pattern such that at least some of the recesses 16 and/or light guides 18 (and potentially light sensors 12) are relatively equally spaced from one another in a defined positional pattern. In other examples, the reaction recesses 16 and/or light guides 18 (and potentially light sensors 12) may be provided in a random pattern, and/or at least some of the reaction recesses 16 and/or light guides 18 (and potentially light sensors 12) may be variably spaced from each other. The interstitial areas between the array of reaction recesses 16 may be substantially flat surfaces. As explained further below, the array of reaction recesses 16 of the reaction structure 20 may have at least one corresponding reaction site provided therein (e.g., immobilized on a surface thereof).

The area of the light detection devices 10 which is light sensitive is referred to as the active area. The active area of the light detection devices 10 thereby includes the area containing the light guides 18, which direct light to the light sensors 12. As noted above, the top portion of the light detection devices 10 include a reaction structure 20 with an array of reaction recesses 16 positioned thereover for containing at least one corresponding reaction site thereon/therein that are available/accessible for reagent delivery and reaction (e.g., responsive to an analyte in a reaction fluid) and illumination during operation of the flow cells 2. As shown in FIG. 5, the reaction structure 20 may extend over at least the majority of the active area of the light detection devices 10. In such a configuration, the top detector surface 22 of the reaction structure 20 may thereby define the active surface of the light detection device 10 over which a reaction solution may flow and reside and interact with the reaction sites positioned on/in the reaction recesses 16. The active surface of the light detection device 10 may comprise the surfaces of the recesses 16 and interstitial areas extending between and about the recesses 16.

The exposed top surfaces of the reaction structure 20 (i.e., the exposed top surfaces of the reaction recesses 16 and/or the interstitial areas extending therebetween and thereabout) may comprise smooth planar/flat surfaces. In particular examples, the exposed top surfaces of the interstitial areas and/or reaction recesses 16 of the reaction structure 20 may be smooth planar/flat surfaces that prevent reaction solution or any other biological and/or chemical substances from being trapped or remaining thereon and/or prevent pad hopping errors. For example, the top exposed surfaces of the reaction structure 20 may include a surface roughness in the micrometric range, such as a surface roughness of less than or equal to about 20µm, or less than or equal to about 1µm. In some examples, the exposed top surface of the reaction structure 20 may include a surface roughness of less than or equal to about 100nm, or less than or equal to about 10nm.

The reaction structure 20 may comprise one or more layers. In one example, the reaction structure 20 includes a plurality of overlapping layers. The reaction structure 20 may include one or more layers that are configured to allow excitation light signals and/or emitted light signals from the reaction sites in the reaction recesses 16 (after treatment with reaction solution) to pass therethrough, into an opening of one or more corresponding light guide 18, and potentially to one or more corresponding light sensor 12 (depending upon the configuration of the light guides 18, for example). As another example, the reaction structure 20 may include one more layer that prevents crosstalk or "sharing" of emitted light from a particular reaction site in a reaction recess 16 from propagating/passing to a non-corresponding sensor 12.

The reaction structure 20 may provide a solid exposed detector surface 22 that permits chemicals, biomolecules or other analytes-of-interest to be immobilized thereon. For example, each of the reaction sites positioned on/in the reaction recesses 16 may include a cluster of biomolecules that are immobilized on the exposed outer surface thereof. Thus, the reaction structure 20 may comprise a material that permits the reaction sites to be immobilized to the reaction recesses 16. The reaction structure 20 may be physically and/or chemically modified to facilitate immobilizing the biomolecules to form the reaction sites and/or to facilitate detection of the light emissions therefrom. Examples of layers which may form the reaction structure 20, at least in part, include at least one SiN layer and at least one TaO layer. However, the reaction structure 20 may comprise differing layers (e.g., different layers, fewer layers, and/or additional layers) and/or differing materials.

The exposed outer surface (or detector surface) 22 of the reaction structure 20 of each light detection device 10 may be functionalized (e.g., chemically and/or physically modified in a suitable manner for conducting the designated reactions). For example, the detector surface 22 may be functionalized and may include at least one reaction site on/within the nanowells 16 having one or more biomolecules immobilized thereto. The reaction sites may include biological and/or chemical substances that are configured to initiate a reaction and/or form a reaction product that generates/emits light signals in response to the excitation light. In particular examples, the reaction sites may include clusters/colonies of biomolecules (e.g., oligonucleotides) that are immobilized on the detector surface 22 within the nanowells 16. For example, the reactions sites may generate light emissions in response to incident excitation light after treatment with the reaction solution. The excitation light may be emitted or produced from any illumination source (not shown), which may or may not be part of the flow cells 2. In some examples, the illumination system may emit the excitation light at a certain wavelength or wavelengths that excites the biological and/or chemical substance(s) of the reaction sites (e.g., a reaction initiated by the reaction solution and/or reaction product formed via the reaction solution at the reactions sites).

The light guides 18 may comprise a filter material configured to filter the excitation light or a range of wavelengths including that of the excitation light, and permit the light emissions from at least one reaction site of at least one corresponding reaction recess 16 (or a range of wavelengths including that of the light emissions) to propagate therethrough and toward at least one corresponding light sensor 12. The light guides 18 may be, for example, an absorption filter (e.g., an organic absorption filter) such that the filter material absorbs a certain wavelength (or range of wavelengths) and allows at least one predetermined wavelength (or range of wavelengths) to pass therethrough. Each of the light guides 18 of the array may include substantially the same filter material, or differing light guides 18 may include differing filter material. Each light guide 18 may thereby be configured relative to surrounding material of the device 10 (e.g., dielectric material) to form a light-guiding structure. For example, the light guides 18 may have a refractive index of at least about 2.0. In certain configurations, the light guides 18 may comprise an optical density (OD) or absorbance of the excitation light of at least about 4 OD.

As shown in FIG. 5, each of the light detection devices 10 includes circuitry 24 that transmits/conducts electrical signals when light emissions (e.g., photons) are detected by the light sensors 12 thereof. As discussed above, the light emissions may be emitted from/by the at least one reaction site associated with a reaction recess 16 of the reaction structure 20, and travel to an associated light sensor 12 through at least one associated light guide 18. The circuitry 24 may include interconnected conductive elements (e.g., conductors, traces, vias, interconnects, etc.) that are capable of conducting electrical current, such as the transmission of data signals that are based on detected photons. For example, the circuitry 24 may comprise a microcircuit arrangement. The light detection device 10 may comprise at least one integrated circuit having an array of the light sensors 12 electrically coupled to the circuitry 24. The circuitry 24 of each light detection device 10 may be configured for signal amplification, digitization, storage, processing, or a combination thereof. The circuitry 24 may collect (and potentially analyze) the light emissions detected by the sensors 12 and generate data signals for communicating detection data to a socket 50 of a flow cell system 80 as explained above and further below and, ultimately, a biosensor and/or bioassay system. The circuitry 24 may also perform additional analog and/or digital signal processing in the light detection device 10

As shown in FIG. 5, the flow cells 2 of the wafer level flow cell structure 1 may include a lid or cover 4 extending over the front/top side of the light detection devices 10. For example, a bottom surface/portion of the lid 4 may be coupled to the top surface 22 of the reaction structure 20 of the light detection devices 10, as shown in FIG. 5. In this way, the lid 4 may extend over the reaction structure 20 of the light detection devices 10. As shown in FIG. 5, a bottom surface/portion of the lid 4 may be spaced above the exposed top/detector surface 22 of the reaction structure 20 of each light detection device 10 such that a flow channel 6 is formed therebetween. A flow channel 6 may extend over a single respective light detection device 10, as shown in FIG. 5. Alternatively, a flow channel 6 may extend over a plurality of light detection devices 10. The lid 4 may be a continuous layer that extends over the reaction structure 20 of each light detection device 10 of the wafer level flow cell structure 1, or may comprise separate and distinct layers or portions corresponding to each respective light detection device 10 (and that form respective flow channels 6) of the wafer level flow cell structure 1.

Each flow channel 6 is configured (e.g., sized and shaped) to direct a fluid, such as the reaction solution, along the detector surface 22 of the reaction structure 20 of the associated light detection device 10. As shown in FIG. 5, side portions of the interior/bottom surface/portion of the lid 4 may define the lateral sides or area of the flow channel 6. The flow channels 6 may at least substantially align/overlap with the active area of the light detection devices 10. In some examples, the areas of the flow channels 6 may extend beyond the active area of the light detection devices 10. In some examples, the flow channels 6 may include a height (extending between the bottom surface/portion of the lid 4 and the top surface 22 of the reaction structure 20 of the light detection devices 10 within the range of about 50µm to about 400µm, or more within the range of about 80µm to about 200µm, for example. In one example, the height of the flow channels 6 is about 100µm The overall thickness of lid 4 can be, for example, from about 300µm to about 1,000µm.

In some examples, the lid 4 may be indirectly coupled to the top surface 22 of the reaction structure 20 of the light detection devices 10 via an intervening layer, which may or may not at least partially define the lateral sides of the flow channels 6. In other examples, the lid 4 may be directly coupled to the top surfaces 22 of the reaction structure 20 of the light detection devices 10. In such an example, the lid 4 may include side wall portions that that space portions of the bottom surface/portion of the lid 4 extending over the light detection devices 10 above the exposed outer top surface 22 of the reaction structure 20. The side wall portions of such a lid 4 may define the lateral sides of the flow channels 6. In one example, the lid 4 may be directly coupled to the top surfaces of the reaction structure 20 of the light detection devices 10 via a low autofluorescence adhesive.

As also shown in FIG. 5, the lid 4 may include at least one port 8 that is in communication with a flow channel 6 and, potentially, other ports (not shown). The at least one port 8 may include a passageway extending from an exterior surface of the lid 4 (e.g., an exterior top surface thereof) to the bottom/interior surface thereof such that the passageway extends through the lid 4 and to a respective flow channel 6. For example, the at least one port 8 of a flow cell 2 may be in communication with at least one port 70 of a top cover portion 54 of a socket 50 (as described further below with respect to FIG. 6), which as may be in communication with at least one other port of an instrument that provides the reaction solution or another biological and/or chemical substance (e.g., a biosensor, bioassay system, cartridge workstation or any other instruments that couples with the socket 50). In some examples, the lid 4 may include at least two ports 8 associated within each flow channel 6 that comprise inlet and outlet ports to the flow channel 6, as shown in FIG. 5. In some examples, the diameter of the at least one port 8 may be about 750µm, however the at least one port 8 may be of any size and any shape.

The at least one port 8 may allow for the flow of a reagent fluid or solution into, and potentially through, the associated flow channel 6. As explained above, during use of the flow cells 2 (e.g., after dicing of the wafer level flow cell structure 1 and coupling the diced flow cells 2 with the socket 50), chemical reactions may take place between the reagent solution and the reaction sites on the detector surface 22 of the reaction structure 20 of each light detection device 10 in the respective flow channel 6. When illuminated through the lid 4, the light detection devices 10 of the flow cells 2 are able to sense the chemical reactions that take place in the flow channel 6 via light emitted therefrom and produce signals in response thereto. The signals may be conducted through the circuitry 24 of the light detection devices 10. The lid 4 may thereby comprise a material that is transparent to the excitation light propagating from an exterior of the flow cells 2 and toward/into the flow channels 6. It is noted that excitation light may approach the lid 4 from any angle, and along the same or different angles. In some examples, the lid 4 may comprise a material that is optically transparent to at least the excitation light and has low or no autofluorescence, such as, but not limited to, cyclic olefin copolymer (COC).

Initially, the reaction sites of the nanowells 16 of the reaction structure 20 of a light detection device 10 may not include a designated reaction. As discussed above, a reaction site may include biological and/or chemical substances immobilized to the detector surface 22 on the base and/or side surfaces of the nanowells 16 of the reaction structure 20. In some examples, the biological and/or chemical substances that may ultimately form a designated reaction may be immobilized to the reaction structures 20 (e.g., the nanowells 16 thereof) prior to the lid 4 being coupled to the light detection devices 10 of the flow cells 2 (i.e., prior to formation of the flow channels 6) of the wafer level flow cell structure 1. In some other examples, the biological and/or chemical substances that may ultimately form a designated reaction may be immobilized to the reaction structures 20 (e.g., the nanowells 16 thereof) after the lid 4 is coupled to the light detection devices 10 of the flow cells 2 (i.e., subsequent to formation of the flow channels 6) of the wafer level flow cell structure 1. Further, the biological and/or chemical substances that may ultimately form a designated reaction may be immobilized to the reaction structures 20 (e.g., the nanowells 16 thereof) of the light detection devices 10 of the flow cells 2 of the wafer level flow cell structure 1, or may be immobilized to the reaction structures 20 of the light detection devices 10 of distinct flow cells 2 are separation thereof (e.g., via dicing) from the wafer level flow cell structure 1.

In particular examples, the reaction sites are located proximate to an opening of at least one corresponding light guide 18 so that designated/predefined light emissions emitted from the reaction sites after a designated reaction has occurred via treatment with the reaction solution propagate through the reaction structure 20, through the at least one corresponding light guide 18, and to at least one corresponding light sensor 12.

The biological and/or chemical substances of a single reaction site may be similar or identical (e.g., a colony of analytes (e.g., oligonucleotides) that have a common sequence). However, in other examples, a single reaction site and/or nanowell 16 may include differing biological and/or chemical substances. Before a designated reaction, the reaction sites may include one or more analyte (e.g., an analyte-of-interest). For example, the analyte may be an oligonucleotide or a colony thereof (e.g., an oligonucleotide-of-interest). The oligonucleotides may have an effectively common sequence and bind with a particular fluorescently labeled biomolecule, such as a fluorescently-labeled nucleotide.

However, prior to the designated reaction, the fluorophores of the fluorescently labeled biomolecule are not incorporated or bonded to the biological and/or chemical substances (e.g., an oligonucleotides) at the reaction sites. To achieve the designated reaction (i.e., to incorporate a fluorescently labeled biomolecule with the biological and/or chemical substances of the reaction sites 114), a flow of the reaction solution may be provided into the flow channel 6 of a light detection device 10 of a flow cell 2 via the at least one port 8, and thereby to the reaction structure 20 thereof. The reaction solution may be any solution. In some examples, the reaction solution may comprise a liquid. For example, the reaction solution may be an aqueous solution. In one implementation, the reaction solution contains one or more nucleotide types, at least some of which are fluorescently-labeled, and the reaction solution also contains one or more biomolecules, such as polymerase enzymes, which incorporate nucleotides into a growing oligonucleotide at the reaction site, thereby labeling the oligonucleotide with a fluorescently-labeled nucleotide. In this implementation, a wash solution may be utilized remove any free nucleotides that did not incorporate into oligonucleotides. The reaction sites can then be illuminated with an excitation light, causing fluorescence in those reaction sites where a fluorescently-labeled nucleotide was incorporated. Reaction sites that did not incorporate a fluorescently-labeled nucleotide do not emit light upon incident excitation light.

As shown in FIG. 5, the device circuity 24 of the light detection device 10 may extend entirely through the base wafer portion 14. For example, the device circuity 24 may include vias 28 that extend through the base wafer portion 14 such that they are exposed and accessible at a back side of the base wafer portion 14, as also shown in FIG. 5. The back side of the base wafer portion 14 and the back side of the vias 28 may or may not be co-planar.

As shown in FIG. 5, the wafer level flow cell structure 1 may include a redistribution portion positioned over the back side of the base wafer portion 14 and the back sides of the vias 28 of the device circuity 24 of the light detection devices 10. The redistribution portion may effectively reroute the exposed portion of the device circuity 24 to electrically conductive pads 34, as explained further below. The redistribution portion may comprise electrically insulative/non-conductive (or a semiconductor) portions/layers 30 and electrically conductive portions/layers 32 extending through the electrically insulative portion 30. The electrically conductive portions 32 may comprise an electrically conductive material (e.g., copper, gold, tungsten, aluminum or a combination thereof), but it is understood that other electrically conductive materials may be utilized. The electrically non-conductive portions 32 may comprise an electrically non-conductive and/or semiconductor material, such as polymer (e.g., a thin film polymer), glass, silicon, silica, quartz, fiberglass, epoxy, ceramic or a combination utilized, but it is understood that other electrically non-conductive and/or semiconductor materials may be utilized.

The electrically insulative portions 30 of the redistribution portion extend over (directly or indirectly) the back side of the base wafer portion 14, as shown in FIG. 5. In one example, each electrically insulative portion 30 may or may not extend over (directly or indirectly) at least a portion of the back side of a via 28 of the device circuity 24. Each electrically conductive portion 32 of the redistribution layer may extend directly over the back side of a respective/corresponding via 28 of the device circuity 24, as shown in FIG. 5. Adjacent electrically conductive portions 32 may include an electrically insulative portion 30 extending therebetween, as shown in FIG. 5. Adjacent electrically conductive portions 32 of the redistribution layer are thereby electrically isolated from each other by an electrically insulative portion 30. As the electrically conductive portions 32 are in electrical communication with the vias 28, and adjacent portions thereof are isolated by an electrically insulative portion 30, the electrically conductive portions 32 overlying the vias 28 are able to transmit/conduct the electrical data signals from the circuitry 24 of the light detection devices 10 (based on photons detected by the light sensors 116 thereof) through/past the electrically insulative portion 30. The electrically conductive portions 32 overlying the vias 28 are thereby also able to transmit/conduct electrical data signals to the circuitry 24 of the light detection devices 10 through/past the electrically insulative portion 30. The device circuity 24 may thereby effectively comprise the electrically conductive portions 32 of the redistribution portion. The back sides of the electrically insulative portions 30 and the back sides of the electrically conductive portions 32 may or may not be co-planar.

The vias 28 extending through the base wafer portion 14 may compromise or weaken the structural integrity of the base wafer portion 14, and thereby the light detection devices 10 of the flow cells 2 and the flow cells themselves (e.g., before and after being separated from the wafer level flow cell structure 1. To provide structural support/rigidly to the base wafer portion 14, and thereby the light detection devices 10 themselves and the flow cells 2 comprising the light detection devices 10, the wafer level flow cell structure 1 may include a support layer 36 extending over (directly or indirectly) the back side of the base wafer portion 14. For example, as shown in FIG. 5, a support layer 36 may extend directly over at least a portion of the electrically insulative portions 30. In some examples, the support layer 36 may extend directly over the electrically insulative portions 30 and portions of the electrically conductive portion 32. The support layer 32 may comprise one or more relatively strong and/or stiff electrically non-conductive and/or semiconductor material, such glass, silicon, silica, quartz, fiberglass, ceramic, polymer, epoxy, dielectric material or a combination thereof, but it is understood that other electrically conductive materials may be utilized.

As shown in FIG. 5, the wafer level flow cell structure 1 may include a plurality of exposed spaced electrically conductive back side contact pads 34 extending directly over the back side of the electrically conductive portions 32 of the redistribution portion. As also shown in FIG. 5, each of the back side contact pads 34 may extend (directly or indirectly) over the back side of an electrically insulative portion 32 of the redistribution portion and between portions of the support layer 36. The back side contact pads 34 may extend partially through gaps/openings between portions of the support layer 36 such that the back sides of the contact pads 34 are exposed at the back side of the flow cells 2 of the wafer level flow cell structure 1, and adjacent contact pads 34 include a portion of the support layer 36 extending (fully or partially) therebetween. Stated differently, the contact pads 34 may be positioned within spaces/voids of the support layer 36 such that the back sides of the contact pads 34 are exposed at the back side of the flow cells 2 of the wafer level flow cell structure 1.

A separate and distinct back side contact pad 34 may be provided for each electrically conductive portion 32 and an associated via 28 (i.e., an exclusively associated via 128) of each light detection device 10 of each flow cell 2 of the wafer level flow cell structure 1. As each back side contact pad 32 is in electrical connection/communication with an electrically conductive portion 32, and each electrically conductive portion 32 is in electrical connection/communication with a via 28 of the device circuitry 24 of a light detection device 10, the back side contact pads 34 can transmit (e.g., conduct) the electrical data signals from the circuitry 24 of the light detection devices 10 (based on photons detected by the light sensors 16 thereof) and to the circuitry 24 of the light detection devices 10. The support layer 36 may be electrically insulative or non-conductive (or a semiconductor) so as to not interfere with the operation of the contact pads 34 from transmitting/conducting the data signals from/to the circuitry 24 of the light detection devices 10. The back side contact pads 34 may comprise an electrically conductive material (e.g., copper, gold, tungsten, aluminum or a combination thereof), but it is understood that other electrically conductive materials may be utilized.

As shown in FIG. 5, the contact pads 34 at the back side of the flow cells 2 may be recessed with respect to the support layer 36. For example, the support layer 36 may be thicker than the contact pads 34 such that the back side surfaces of the portions of the support layer 36 extending between/about the contact pads 34 define the back side boundary of the flow cells 2. The exposed back side surfaces of the contact pads 34 may thereby be at least partially surrounded by the support layer 36 and recessed with respect to the back side of the flow cells 2 (defined by the support layer 36).

FIG. 6 illustrates an example of flow cell system 180 in accordance with one or more aspects of the present disclosure. The flow cell system 180 comprises a socket 150 and at least one flow cell 2 that separated from the wafer level flow cell structure 1 of FIG. 5, for example. The flow cell 2 of the flow cell system 180 may be a one or more flow cell that is separated from the wafer level flow cell structure 1 (e.g., from the other flow cells 2 thereof) via a separation process. For example, the flow cell 2 may be separated from the wafer level flow cell structure 1 via dicing of the wafer level flow cell structure 1 into separate and distinct flow cell dies or structures. Dicing of the wafer level flow cell structure 1 may comprise, for example, scribing and breaking of the wafer level flow cell structure 1, mechanical sawing of the wafer level flow cell structure 1, or laser cutting of the wafer level flow cell structure 1. However, any other separation process/technique may be used to separate the flow cell 2 from the wafer level flow cell structure 1 (i.e., separate the wafer level flow cell structure 1 into separate and distinct flow cell structures 2). As shown in FIG. 6, the separated (e.g., diced) flow cell 2 may be positioned directly within the socket 150. The flow cell 2 may thereby be frameless (i.e., void of a frame) such that the lateral side surfaces of the flow cell 2 are the exposed surfaces of the flow cell 2 formed via the separation process from the wafer level flow cell structure 1. For example, the lateral side surfaces of the flow cell 2 formed via the wafer level flow cell structure 1 may be defined by the lid 4, the reaction structure 20, the dielectric layers, the circuity 24, the base wafer portion 14, the redistribution portion, the support layer 36 and/or any other portion of the wafer level flow cell structure 1 (or combination thereof).

The socket 150 of the flow cell system 180 is similar to the socket 50 of FIGS. 1-4 described above, and therefore like reference numerals preceded with "1" are used to indicate like components, aspects, functions, processes or functions, and the description above directed to thereto equally applies, and is not repeated for brevity and clarity purposes. As shown in FIG. 6, the electrical contacts 160 of the socket 150 comprise pogo pin contacts that extend into the enclosure 156. The pogo pin contacts 160 each comprise a hollow cylindrical base portion containing a spring-loaded pin that extends into the enclosure 156 and into contact with the contact pads 34 of the flow cell 2. As shown in FIG. 6, the pogo pin contacts 160 extend past the exposed back side of the support layer 36 with the spring-loaded pin portions resiliently biased into contact with the exposed back side surfaces of the contact pads 34 to electrically couple therewith. As also shown in FIG. 6, the back side surfaces of the support layer 30 of the flow cell 2 engage with the interior bottom surface 162 of the base portion 152, and an exterior top surface of the lid 4 of the flow cell 2 engages with the interior top surface 168 of the cover portion 154. The pogo pin contacts 160 may apply a force to the contact pads 34 such that the flow cell 2 is compressed between the interior bottom surface 162 of the base portion 152 and the interior top surface 168 of the cover portion 154 of the socket 150.

As also shown in FIG. 6, the flow cell 2 defines a smaller lateral size (i.e., footprint) than that of the enclosure 156. The side surfaces of the flow cell 2 that extend between the top surface of the lid 6 and the back side surface of the support layer 30 (or the contact pads 34, depending upon where the flow cell 2 is separated from the wafer level flow cell structure 1) are spaced from the inner side walls 158 of the base portion 152 and/or the cover portion 154 such that an open/unoccupied portion of the enclosure 156 extends therebetween. As shown in FIG. 6, the entirety of the lateral side surfaces of the flow cell 2 are spaced from the inner side walls 158 of the base portion 152 and the cover portion 154. In one example, the side surfaces of the flow cell 2 are defined by the lid 4, the reaction structure 20 of the light detection device 10, the dielectric layers of the light detection device 10, the base wafer portion 14 of the light detection device 10, the redistribution layer (e.g., the electrically non-conductive layer 30) and the support layer 36, as shown in FIG. 6. However, some of these portions of the flow cell 2 (and light detection device 10) may not define the lateral side surfaces of the flow cell 2, and other portions of the flow cell 2 (and light detection device 10) may define the lateral side surfaces of the flow cell 2 (e.g., the circuity 24 of the light detection device 10, the electrically conductive portion 32 of the redistribution layer and/or the contacts pads 34). The sides of the flow cell 2 that are spaced from the side walls 158 of the enclosure 156 may be defined, in part, by the light detection device 10 thereof. As noted above, the lateral side surfaces of the flow cell 2 may be formed via the separation process of the flow cell 2 from the wafer level flow cell structure 1.

FIG. 7 illustrates another example of a wafer level flow cell structure 201 in accordance with one or more aspects of the present disclosure. The wafer level flow cell structure 201 is similar to the wafer level flow cell structure 1 of FIG. 5 described above, and therefore like reference numerals preceded with "20" with respect to single digit reference numerals, and preceded with "2" with respect to double digit reference numerals, are used to indicate like components, aspects, functions, processes or functions, and the description above directed to thereto equally applies, and is not repeated for brevity and clarity purposes. As shown in FIG. 7, a difference of wafer level flow cell structure 201 as compared to the wafer level flow cell structure 1 of FIG. 5 is the exclusion of a support layer extending along the back side of the redistribution portion. For example, the back sides of the electrically non-conductive portions 230 and the electrically conductive portions 232 of the redistribution portion may be void of a support layer extending over (directly or indirectly) the back sides thereof. Rather, the back sides of the electrically non-conductive portions 230 may be exposed and/or include the contact pads 234 extending thereover, as shown in FIG. 7.

It is noted that the wafer level flow cell structure 201 may have included a temporary support layer (not shown), such as the support layer 36 described above with respect to the wafer level flow cell structure 1 of FIG. 5, extending over the back side of the base wafer portion 214 of the light detection devices 210 (directly or indirectly) during formation of the wafer level flow cell structure 201 and separation thereof into separate and distinct flow cells 2. For example, the wafer level flow cell structure 201 may have included a temporary support layer extending over the back side of the base wafer portion 214 of the light detection devices 210 (e.g., extending directly over the redistribution portion (and potentially the contact pads 223)) prior to formation of a least a portion of the reaction structures 220 over the top sides 222 of the light detection devices 210 and/or formation of the lid 204 over the reaction structures 220. In some examples, such a temporary support layer may be removed from the wafer level flow cell structure 201 prior to separation of one or more separate and distinct flow cells 202 therefrom (e.g., via dicing), as described above. In some examples, the temporary support layer may be removed from the wafer level flow cell structure 201 after formation of the lid 204 via a debonding process, such as via air blowing, blade insertion, vacuum debonding or mechanical lifting with or without pre-processing (such as edge trimming or laser patterning), for example. However, any process may be utilized to remove the temporary support layer from the wafer level flow cell structure 201 after formation of the lid 204.

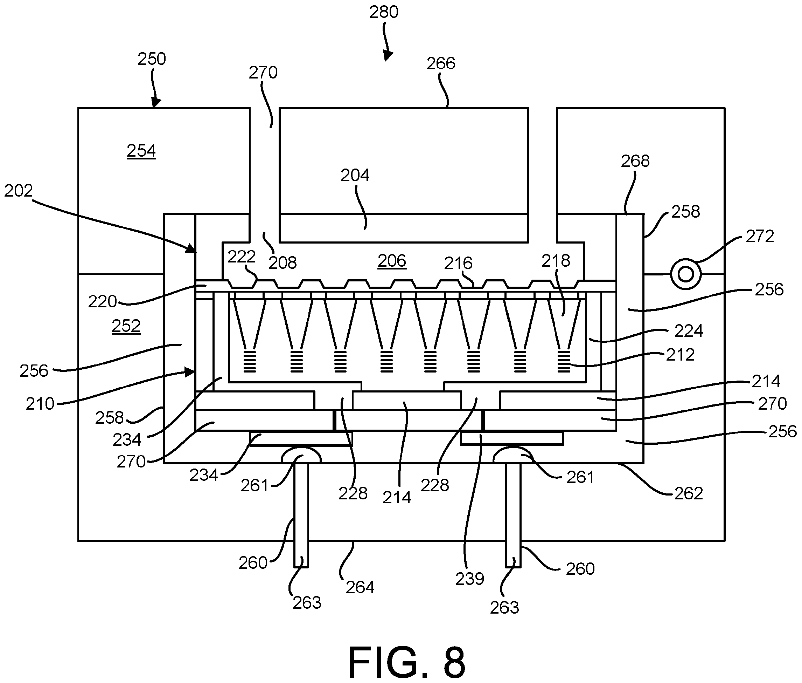

FIG. 8 illustrates another example of flow cell system 280 in accordance with one or more aspects of the present disclosure. The flow cell system 280 comprises a socket 250 and at least one flow cell 202 separated from the wafer level flow cell structure 201 of FIG. 7, for example. As discussed above, the flow cell 202 may be separated from the wafer level flow cell structure 201 via dicing or any other separation process that separates the wafer level flow cell structure 201 into separate and distinct flow cell dies or structures. The socket 250 of the flow cell system 280 is similar to the socket 150 of FIGS. 1-4 described above, and therefore like reference numerals preceded with "2" are used to indicate like components, aspects, functions, processes or functions, and the description above directed to thereto equally applies, and is not repeated for brevity and clarity purposes.

As shown in FIG. 8, the electrical contacts 260 of the socket 250 each comprises a lead portion 263 extending through the base portion 252 and a convex portion 261 positioned within the enclosure 256 on, or proximate to, the interion bottom surface 262 of the base portion 252. The lead portion 263 may extend from the exterior bottom surface 264 to the interior bottom surface 262 of the base portion 252. The convex portion 261 may comprise an apex that is spaced from the interior bottom surface 262 of the base portion 252 and that engages (i.e., is in abutment with) the exposed back side surface of the contact pads 234 of the flow cell 202. In this way, the convex portions 261 of the electrical contacts 260 may be electrically coupled with the contact pads 234 of the flow cell 202 to transmit signals to and/or from an instrument (e.g., instrument 82 of FIG. 4 described above). As described above, the flow cell 202 may be securely coupled within the enclosure 265 via engagement of flow cell 202 by the cover portion 254 and the base portion 252 (and/or the electrical contacts 260) (and the engagement of the cover portion 254 and the base portion 252). In some examples, the convex portions 261 of the electrical contacts 260 may define an arcuate outer surface, such as a circular outer surface. In some examples, the convex portions 261 of the electrical contacts 260 may comprise a ball grid array. In some examples, the convex portions 261 of the electrical contacts 260 may comprise balls of solder coupled to the lead portions 263.

FIG. 9 illustrates another example of wafer level flow cell structure 301 in accordance with one or more aspects of the present disclosure. The wafer level flow cell structure 301 is similar to the wafer level flow cell structure 1 of FIG. 5 described above, and therefore like reference numerals preceded with "30" with respect to single digit reference numerals, and preceded with "3" with respect to double digit reference numerals, are used to indicate like components, aspects, functions, processes or functions, and the description above directed to thereto equally applies, and is not repeated for brevity and clarity purposes. As shown in FIG. 9, a difference of wafer level flow cell structure 301 from the wafer level flow cell structure 1 of FIG. 5 is the exclusion of a redistribution portion, a support layer and contact pads extending over the back side of the light detection devices 310 of the flow cells 302. Rather, the back side 374 of the base wafer portion 314 is exposed and forms the back side boundary of the flow cells 302, as shown in FIG. 9.

As also shown in FIG. 9, the light detection devices 310 of the flow cells 302 of the wafer level flow cell structure 301 are void of vias extending through the base wafer portion 314 to the back side 374 thereof. The device circuity 324 of the light detection device 310 extends adjacent to, or only potentially partially through, the base wafer portion 314. The base wafer portion 314 may thereby be void of an electrically conductive via or other portion of the device circuity 324 that extends therethrough. The back side 374 of the base wafer portion 314, which may comprise an exposed back side surface 374 of the light detection devices 310 and the flow cells 302 as a whole as described above, may be void of the device circuity 324. Stated differently, the device circuity 324 may be positioned fully above the back side 374 of the base portion 314 and within the light detection devices 310 such that the device circuity 324 is inaccessible at the back side 374 of the base wafer portion 314 (and thereby the back sides of the light detection devices 310 and flow cells 302).

The device circuity 324 of the light detection devices 310 of the flow cells 302 of the wafer level flow cell structure 301 may extend to a top side of the light detection devices 310. For example, as shown in FIG. 9, the device circuity 324 may extend through the respective light detection device 310, including through the reaction structure 320 thereof, and may comprise an exposed contact surface 376. The top side 322 of the light detection device 310, which may be formed by the exposed top surface of the reaction structure 320, may thereby include the device circuity 324, as shown in FIG. 9. Stated differently, a contact surface 376 of the device circuity 324 may be exposed and accessible at a top side of the respective light detection device 310, which may be positioned at a top side surface 322 of the reaction structure 320 thereof. In some examples, the contact surface 376 of the device circuity 324 may comprise a contact pad, via or other electrically conductive portion that is electrically coupled to the device circuity 324 of the light detection devices 310.

In some examples (not shown), the contact surfaces 376 of the device circuity 324 may be positioned at (and thereby define a portion of) a lateral side of the light detection devices 310, which may form lateral sides of the flow cell 302 after separation from the wafer level flow cell structure 301. The contact surfaces 376 of the device circuity 324 may thereby be exposed and accessible at lateral sides of the flow cell 302. For example, the device circuity 324 may extend through a portion of the reaction structure 20, the dielectric material, the base wafer portion 314 or the lid 304 (or a layer extending thereover) to an exposed lateral side edge of the flow cell 302 defined thereby. In such examples, the device circuity 324 may not extend entirely through the reaction structure 320 to the top surface 322 thereof.

As shown in FIG. 9, when the contact surfaces 376 of the device circuity 324 of a light detection device 310 of a flow cell 302 of the wafer level flow cell structure 301 are positioned at the top surface 322 of the reaction structure 320 thereof, the lid 304 of the flow cell 302 may extend from a medial/interior portion of the top surface 322 as compared the position of the contact surfaces 376, as shown in FIG. 9. In this way, a portion of the contact surfaces 376 of a flow cell 302 may be exposed and accessible (i.e., not fully covered by the lid 304 and not positioned within the flow channel 306 between the lid 304 and the top surface 322 of the reaction structure 320). It is noted that after positioning of the lid 304 on the wafer level flow cell structure 301, portions of the lid 304 may extend over (directly or indirectly) the contact surfaces 376 of the device circuity 324 at the top surface 322 of the reaction structure 320 of the flow cells 302 such that the contact surfaces 376 are not exposed and accessible. The portions of such lids 302 extending over the contact surfaces 376 may be removed from the wafer level flow cell structure 301 so that the contact surfaces 376 are exposed and accessible, as shown in FIG. 9.

FIGS. 10-12 illustrate formation of another flow cell system 380 (FIG. 12) in accordance with one or more aspects of the present disclosure. The flow cell system 380 comprises a flow cell device carrier 390, a socket 350 (FIG. 12) and at least one flow cell 302 separated from the wafer level flow cell structure 301 of FIG. 9. As discussed above, the flow cell 302 may be separated from a wafer level flow cell structure 301 via dicing or any other separation process that separates the wafer level flow cell structure 301 into separate and distinct flow cell dies or structures. The socket 350 (FIG. 12) of the flow cell system 380 is similar to the socket 250 of FIG. 8 described above, and therefore like reference numerals preceded with "3" are used to indicate like components, aspects, functions, processes or functions, and the description above directed to thereto equally applies, and is not repeated for brevity and clarity purposes.

As shown in FIGS. 10 and 11, the flow cell device carrier 390 may comprise a substrate portion 392 and side wall portions 394 extending (e.g., upwardly) from the substrate portion 392 to form a cavity 396 therebetween. The cavity 396 may be open/exposed at the top side of the flow cell device carrier 390. At least a portion of the substrate portion 392 and/or the side wall portions 394 may be electrically insulative (i.e., non-conductive). In some examples, the substrate portion 392 and/or the side wall portions 394 may comprise an electrically insulative or semiconductor material. In one such example, the substrate portion 392 and/or the side wall portions 394 may comprise a ceramic, such as but not limited to alumina. In such an example, the flow cell device carrier 390 may comprise a ceramic land chip carrier (CLCC). In another example, the substrate portion 392 and/or the side wall portions 394 may comprise an organic electrically insulative or semiconductor material, such as but not limited to a glass-reinforced epoxy laminate material, bismaleimide-triazine, a non-epoxy halogen free material, polyamide or a thermoplastic (e.g., polyphenylene sulfide (PPS) or liquid crystal polymer (LCP). In such an example, the flow cell device carrier 390 may comprise an organic land chip carrier (OLCC) device. The substrate portion 392 and side wall portions 394 may comprise a single layer of material or a plurality of layers of material. The substrate portion 392 and side wall portions 394 may be integral (i.e., of one-piece construction) or may be separate and distinct components that are coupled together.

The substrate portion 392 of the flow cell device carrier 390 may include a plurality electrically conductive vias/leads 398 extending therethrough from an exterior back side surface 393 (e.g., bottom surface) of the substrate portion 392 at least to an interior surface of the substrate portion 392 that is positioned in, and/or defines, the cavity 396, as shown in FIGS. 10 and 11. The electrically conductive vias 398 may thereby be exposed within the cavity 396 and exposed exterior to the cavity 396 at the back side 393 of the substrate portion 392 as accessible contact surfaces for electrical connection thereto to transmit data signals from and to the light detection device 310 of the flow cell 302.

As shown in FIG. 10, the flow cell 302 may be positioned (at least partially) within the cavity 396 of the flow cell device carrier 390 such that the back side 374 of the base wafer portion 314 is positioned on/over (directly or indirectly) the interior surface of the substrate portion 392. In some examples, the back side 374 of the base wafer portion 314 may be coupled (fixedly or removably) to the interior surface of the substrate portion 392. For example, the base wafer portion 314 of the flow cell 302 may be bonded/adhered to the interior surface of the substrate portion 392 via one or more material layer, such as one or more layer of polymer (e.g., plastic or epoxy), silicon, glass (e.g., quartz or fused silica), ceramic, dielectric composite material or a combination thereof, for example.

As shown in FIGS. 10-12, the flow cell device carrier 390 may be configured (e.g., sized and shaped) such that an open/unoccupied portion of the cavity 396 extends between lateral sides of the flow cell 302 and the interior side surfaces of the side wall portions 394 of the flow cell device carrier 390 when the flow cell 302 is coupled to the substrate portion 392. As also shown in FIGS. 10-12, the vias 398 may be positioned within the substrate portion 392 such that the exposed portions thereof within the cavity 396 are not fully covered by the flow cell 302 when the flow cell 302 is coupled to the interior surface of the substrate portion 392.

The exposed contact surfaces 376 of the device circuity 324 of the light detection device 310 of the flow cell 302 (e.g., positioned at the top and/or side surfaces of the flow cell 302) may be electrically coupled to the electrically conductive vias 398 within the cavity 396. As shown in FIGS. 10-12, an electrically conductive wire or other structure 399 may be electrically coupled between an exposed contact surface 376 of the device circuity 324 of the light detection device 310 of the flow cell 302 coupled within the cavity 396 and a corresponding via 398 of the substrate portion 392 of the flow cell device carrier 390. The wires 399 may comprise any electrically conductive material, such as a metal (e.g., gold or copper). The wires 399 can transmit the data signals between the circuitry 324 of the light detection device 110 of the flow cell 302 and the vias 398 of the substrate portion 392 of the flow cell device carrier 390. In some examples, the wires 399 may extend from the exposed surface portions of the vias 398 within the cavity 396 to the exposed contact surfaces 376 of the device circuity 324 of the light detection device 310 of the flow cell 302 coupled to the substrate portion 392 within open space/areas of the cavity 396 between the side wall portions 394 and the lateral sides of the flow cell 302. In some examples, the wires 399 may be encased within an insulative material (not shown). The insulative material may comprise an electrically insulative material (i.e., non-conductive) or semiconductor material so as to electrically insulate and isolate the wires 399. The insulative material may extend between the lateral sides of the flow cell 302 and the adjacent interior surfaces of the flow cell device carrier 390 that form the cavity 396.

As shown in FIG. 12, the flow cell device carrier 390 (including the flow cell 302 fixedly and electrically coupled thereto within the cavity 396 thereof) may be coupled within the enclosure 356 of the socket 350. The flow cell device carrier 390 may be securely held within the enclosure 356 of the socket 350 when the cover portion 354 and the base portion 352 are engaged. In some examples, the socket 350 may be configured to apply a compressive force to the flow cell device carrier 390 to secure the flow cell device carrier 390 (with the flow cell 302 coupled thereto) within the enclosure 356. The base portion 352 of the socket 350 may engage the substrate portion 392 of the flow cell device carrier 390 (e.g., via the electrical contacts 360) and the cover portion 354 of the socket 350 may engage the side wall portions 394 of the flow cell device carrier 390 and/or the lid 304 of the flow cell 302 (and potentially apply a compressive force thereto) to secure the flow cell device carrier 390 (and flow cell 302 and wires 399 coupled thereto) within the enclosure 356 of the socket 350, as shown in FIG. 12. As another example, the flow cell device carrier 390 may be bonded/adhered to the socket 350 (e.g., the base portion 352) to secure the flow cell device carrier 390 (and flow cell 302 and wires 399 coupled thereto) within the enclosure 356.

When the flow cell device carrier 390 is positioned within the enclosure 356 of the socket 350, the vias 398 of the substrate portion 392 of the flow cell device carrier 390 may be electrically coupled to the electrical contacts 360 of the base portion 352 of the socket 350, as shown in FIG. 12. The electrical contacts 360 of the socket 352 can thereby transmit data signals to and from the device circuity 324 of the light detection device 310 of the flow cell 302 by way of the vias 398 of the substrate portion 352 of the flow cell device carrier 390 and the wires 399 extending between the vias 398 and the contact surfaces 376 of the device circuity 324. The portions of the electrical contacts 360 provided at the exterior bottom surface 364 of the base portion 352 of the socket 352 may thereby provide for electrical connection to the device circuity 324 of the light detection device 310 of the flow cell 302 to transmit data signals to and from the device circuity 324 of the light detection device 310 (e.g., instrument 82 of FIG. 4 described above).

FIGS. 13-15 illustrate formation of another flow cell system 480 (FIG. 15) in accordance with one or more aspects of the present disclosure. The flow cell system 480 (FIG. 15) comprises a socket 450 (FIG. 15) and the at least one flow cell 402 separated from the wafer level flow cell structure 401 of FIGS. 10-12. The description above directed to the socket 450 and the flow cell 402 equally applies to flow cell system 480, and is not repeated for brevity and clarity purposes. As shown in 13-15, the flow cell 402 may be coupled to a top surface of an electrically insulative (i.e., non-conductive) substrate portion 440. For example, the back side 474 of the base wafer portion 414 of the flow cell 402 may be bonded/adhered to the top surface of the substrate portion 440 via one or more layers, such as one or more layers of polymer (e.g., plastic or epoxy), silicon, glass (e.g., quartz or fused silica), ceramic, dielectric composite material or a combination thereof, for example. However, any other attachment technique may be utilized. The substrate portion 440 may comprise any electrically non-conductive material or semiconductor material, such as but not limited to a polymer (e.g., an epoxy), silicon, glass, ceramic, dielectric material or a combination thereof, for example.

The substrate portion 440 may include a plurality electrically conductive vias/leads 498 extending therethrough from an exterior back side surface 493 (e.g., bottom surface) to the top surface thereof, as shown in FIGS. 13-15. The electrically conductive vias 498 may be exposed at the exterior back side surface 493 and the top side surface of the substrate portion 492 as accessible contact surfaces for electrical connection thereto, as shown in FIGS. 13-15. The vias 498 may comprise any electrically conductive material, such as but not limited to a metal (e.g., gold or copper). In some examples, the substrate portion 440 and the vias 498 may comprise a printed circuit board (PCB).

The exposed contact surfaces 476 of the device circuity 424 of the light detection device 410 of the flow cell 402 (e.g., positioned at the top and/or side surface of the flow cell 402) may be electrically coupled to the electrically conductive vias 498 within the substrate portion 440, as shown in FIGS. 13-15. As shown in FIGS. 13-15, an electrically conductive wire or other structure 499 may be electrically coupled between the exposed contact surfaces 476 of the device circuity 424 of the light detection device 410 of the flow cell 402 coupled to the substrate portion 440 and the vias 498 of the substrate portion 440. The wires 499 can thereby transmit electrical data signals between the circuitry 424 of the light detection device 110 of the flow cell 402 and the vias 498 of the substrate portion 440.

As shown in FIG. 15, the coupled substrate portion 440, wires 499 and flow cell 402 may be coupled within the enclosure 456 of the socket 450. The coupled substrate portion 440, wires 499 and flow cell 402 may be securely held within the enclosure 456 of the socket 450 when the cover portion 452 and the base portion 452 are engaged. In some examples, the socket 450 may be configured to apply a compressive force to the coupled substrate portion 440 and flow cell 402 to secure the coupled substrate portion 440, wires 499 and flow cell 402 within the enclosure 456. The base portion 452 of the socket 450 may engage the substrate portion 440 (e.g., via the electrical contacts 460) and the cover portion 454 of the socket 450 may engage the lid 404 of the flow cell 402 coupled to the substrate portion 440 to secure the coupled substrate portion 440, wires 499 and flow cell 402 within the enclosure 456 of the socket 450, as shown in FIG. 15. As another example, the substrate portion 440 may be bonded/adhered to the socket 450 (e.g., the base portion 452) to secure the coupled substrate portion 440, wires 499 and flow cell 402 within the enclosure 456.

When the coupled substrate portion 440, wires 499 and flow cell 402 are positioned within the enclosure 456 of the socket 450, the vias 498 of the substrate portion 440 may be electrically coupled to the electrical contacts 460 of the base portion 452 of the socket 450, as shown in FIG. 15. The electrical contacts 460 of the socket 452 can thereby transmit data signals to and from the device circuity 424 of the light detection device 410 of the flow cell 402 by way of the vias 498 of the substrate portion 440 and the wires 499 extending between the vias 498 and the contact surfaces 476 of the device circuity 424. The portions of the electrical contacts 460 provided at the exterior bottom surface 464 of the base portion 452 of the socket 452 may thereby provide for electrical connection to the device circuity 424 of the light detection device 410 of the flow cell 402 to transmit data signals to and from the device circuity 424 (e.g., instrument 82 of FIG. 4 described above).

## Claims

1. A flow cell system (180), comprising:
a socket (150) comprising a base portion (152), a plurality of electrical contacts (160), and a cover portion (154) coupled with the base portion (152) comprising at least one first port (170), wherein the base portion (152) and the cover portion (154) cooperatively form an enclosure (156), wherein the electrical contacts (160) extend between the enclosure (156) and an exterior side of the base portion (152), and the at least one first port (170) extends between the enclosure (156) and an exterior side (164) of the cover portion (154); and
a flow cell device (2) secured within the enclosure (156) of the socket (150), comprising:
a frameless light detection device (10) comprising a base wafer portion (14), a plurality of dielectric layers extending over the base wafer portion (14), a reaction structure (20) extending over the dielectric layers that comprises a detector surface (22), a plurality of light sensors (12), device circuitry (24) extending through the dielectric layers electrically coupled to the light sensors (12) to transmit data signals based on photons detected by the light sensors (12), and a plurality of light guides (18) associated with the light sensors (12); and
a lid (4) extending over the detector surface (22) with a flow channel (6) therebetween, the lid (4) comprising at least one second port (8) in communication with the flow channel (6) and the at least one first port (170) of the socket (150),
wherein the device circuity (24) of the light detection device (10) of the flow cell device is electrically coupled to the electrical contacts (160) of the socket (150).

2. The flow cell system according to claim 1, wherein the cover portion (154) and the base portion (152) are removably coupled, and wherein the flow cell device (2) is removably secured within the enclosure (156).

3. The flow cell system according to claims 1 or 2, wherein the cover portion (154) engages the lid (4) of the flow cell device, and one or both of the base portion (152) and the electrical contacts (160) engage a back side of the flow cell device; and optionally wherein the cover portion (154) and one or both of the base portion (152) and the electrical contacts (160) apply a compressive force to the flow cell device to secure the flow cell device within the enclosure (156).

4. The flow cell system according to any one of claims 1-3, wherein the flow cell device further comprises a plurality of contact pads (34) extending over the base wafer portion (14) that are electrically coupled to the device circuity (24) and define exposed back surfaces that comprise portions of the back side of the flow cell device, and wherein the electrical contacts engage the contact pads (34); and optionally
wherein the contact pads (34) are electrically coupled to vias (28) of the device circuity (24) that extend through the base wafer portion (14).

5. The flow cell system according to claim 4, wherein the flow cell device further comprises a support layer (30) extending over the base wafer portion (14), and wherein the support layer (30) extends past the exposed back surfaces of the contact pads (34).

6. The flow cell system according to any one of claims 1-3, wherein the flow cell device (302) further comprises a substrate portion (392) coupled to and extending over the base wafer portion (314) that defines the back side of the flow cell device, wherein the substrate portion (392) comprises a plurality of electrical leads (398) extending therethrough from the back side of the flow cell device;
and optionally
wherein the electrical contacts (360) engage the electrical leads at the back side of the flow cell device; and/or
the electrical leads are electrically coupled to exposed contact surfaces (376) of the device circuity (324) at the detector surface (22) or a lateral side of the flow cell device.

7. The flow cell system according to claim 6, wherein the flow cell device (302) further comprises a plurality of electrically conductive wires (399) electrically coupled between the electrical leads (398) and the exposed contact surfaces (376) of the device circuity (324).

8. The flow cell system according to claim 6, wherein the substrate portion (392) and the electrical leads (398) comprise a printed circuit board.

9. The flow cell system according to claim 6, wherein the flow cell device (302) further comprises side wall portions (394) extending from the substrate portion (392), the substrate portion (392) and the side wall portions (394) forming a cavity (396), and wherein the light detection device (310) is positioned within the cavity (396); and optionally wherein the substrate portion (392) and the side wall portions (394) comprise a ceramic.

10. The flow cell system according to any one of claims 1-9, wherein an open portion of the enclosure (56) extends about exposed lateral sides of the flow cell device; and optionally wherein the exposed lateral sides of the flow cell device are defined by the base wafer portion (14), the dielectric layers, the reaction structure (20), the device circuitry (24) of the light detection device (10), or combinations thereof; wherein preferably
the light detection device (10) comprises a complementary metal-oxide semiconductor (CMOS) light sensor (12).

11. A system, comprising:
the flow cell system according to any one of claims 1-10; and
an instrument (82) coupled with the flow cell system comprising at least one third port (84) and a plurality of instrument electrical contacts,
wherein the at least one third port (84) of the instrument (82) is in communication with the at least one first port (70) of the socket (50) to deliver a flow of reaction solution into the flow channel (6) to form a plurality of reaction sites on the detector surface (22), and
wherein the instrument electrical contacts are in engagement with the electrical contacts (60) of the socket (50) to transmit data signals between the device circuity (24) of the light detection device (10) and the instrument (82).

12. A method, comprising:
separating a flow cell device (2) from a wafer level flow cell structure (1), the wafer level flow cell structure (1) comprising a plurality of integral flow cell devices (2) positioned on a common base wafer (14), the flow cell devices (2) comprising:
a portion of the base wafer (14);
a plurality of dielectric layers extending over the portion of the base wafer (14);
a reaction structure (20) extending over the dielectric layers that comprises a detector surface (22);
a plurality of light sensors (12) positioned within the dielectric layers;
device circuitry (24) extending through the dielectric layers electrically coupled to the light sensors (12) to transmit data signals based on photons detected by the light sensors (12);
a plurality of light guides (18) positioned within the dielectric layers between the detector surface (22) and the light sensors (12); and
a lid (4) extending over the detector surface (22) with a flow channel (6) therebetween, the lid (4) comprising at least one first port (8) in communication with the flow channel (6);
positioning the separated flow cell device within a portion of an enclosure (56) of a socket (50) over a base portion (52) thereof such that the device circuity (24) is electrically coupled to electrical contacts (60) of the socket (50) that are positioned within the enclosure (56) and extend through a portion of the base portion (52); and
coupling a cover portion (54) of the socket with the base portion (52) thereof to secure the separated flow cell device within the enclosure (56) of the socket (50) and couple at least one second port of the cover portion (54) in communication with the at least one port (70) of the flow cell device.

13. The method according to claim 12, wherein separating the flow cell device (2) from the wafer level flow cell structure (1) comprises dicing the wafer level flow cell structure (1):
and optionally
wherein dicing the flow cell device (2) from the wafer level flow cell structure (1) forms lateral side surfaces of the separated flow cell device (2) comprised of at least one of the base wafer (14), the dielectric layers, the reaction structure (20) , the device circuitry (24) and the lid (4), and wherein the lateral side surfaces of flow cell device (2) are exposed within the enclosure (56).

14. The method according to any one of claims 12-13, wherein the flow cell devices (2) further comprise contact pads (34) extending over a back side of the base wafer (14) electrically coupled to vias (28) of the device circuity (24) that extend through the base wafer (14), and wherein positioning the separated flow cell device (2) within a portion of the enclosure (56) of the socket (50) comprises engaging an exposed surface of the contact pads (34) of the separated flow cell device (2) with the electrical contacts within the enclosure (56).

15. The method according to any one of claims 12-13, further comprising coupling the base wafer portion (314) of the separated flow cell device (302) with a substrate (392), and electrically coupling the device circuity (324) of the separated flow cell device (302) with electrical leads (398) of the substrate (392), and wherein positioning the separated flow cell device (302) within a portion of the enclosure (356) of the socket (350) comprises positioning the separated flow cell device (302) and the substrate (392) within the portion of the enclosure (356) of the socket (350) and engaging an exposed surface of the electrical leads of the substrate (392) with the electrical contacts (360) within the enclosure (356).

## Patentansprüche

1. Ein Durchflusszellensystem (180), das Folgendes beinhaltet:
eine Aufnahme (150), beinhaltend einen Basisabschnitt (152), eine Vielzahl von elektrischen Kontakten (160) und einen Abdeckabschnitt (154), der mit dem Basisabschnitt (152) gekoppelt ist und mindestens eine erste Öffnung (170) beinhaltet, wobei der Basisabschnitt (152) und der Abdeckabschnitt (154) zusammenwirkend einen umschlossenen Raum (156) bilden, wobei sich die elektrischen Kontakte (160) zwischen dem umschlossenen Raum (156) und einer Außenseite des Basisabschnitts (152) erstrecken und sich die mindestens eine erste Öffnung (170) zwischen dem umschlossenen Raum (156) und einer Außenseite (164) des Abdeckungsabschnitts (154) erstreckt; und
eine Durchflusszellenvorrichtung (2), die innerhalb des umschlossenen Raumes (156) der Aufnahme (150) gesichert ist und Folgendes beinhaltet:
eine rahmenlose Lichtdetektionsvorrichtung (10), beinhaltend einen Basiswaferabschnitt (14), eine Vielzahl von dielektrischen Schichten, die sich über den Basiswaferabschnitt (14) erstrecken, eine Reaktionsstruktur (20), die sich über die dielektrischen Schichten erstreckt und die eine Detektoroberfläche (22) beinhaltet, eine Vielzahl von Lichtsensoren (12), Vorrichtungsbeschaltung (24), die sich durch die dielektrischen Schichten erstreckt und elektrisch mit den Lichtsensoren (12) gekoppelt ist, um Datensignale auf der Grundlage von durch die Lichtsensoren (12) detektierten Photonen zu übertragen, und eine Vielzahl von Lichtleitern (18), die mit den Lichtsensoren (12) assoziiert sind; und
einen Deckel (4), der sich über die Detektoroberfläche (22) mit einem Durchflusskanal (6) dazwischen erstreckt, wobei der Deckel mindestens eine zweite Öffnung (8) beinhaltet, die mit dem Durchflusskanal (6) und der mindestens einen ersten Öffnung (170) der Aufnahme (150) in Kommunikation steht,
wobei die Vorrichtungsbeschaltung (24) der Lichtdetektionsvorrichtung (10) der Durchflusszellenvorrichtung mit den elektrischen Kontakten (160) der Aufnahme (150) elektrisch gekoppelt ist.

2. Durchflusszellensystem gemäß Anspruch 1, wobei der Abdeckabschnitt (154) und der Basisabschnitt (152) entfernbar gekoppelt sind und wobei die Durchflusszellenvorrichtung (2) entfernbar innerhalb des umschlossenen Raumes (156) gesichert ist.

3. Durchflusszellensystem gemäß den Ansprüchen 1 oder 2, wobei der Abdeckabschnitt (154) mit dem Deckel (4) der Durchflusszellenvorrichtung in Eingriff steht und eines oder beide von dem Basisabschnitt (152) und den elektrischen Kontakten (160) mit einer Rückseite der Durchflusszellenvorrichtung in Eingriff stehen; und, optional, wobei der Abdeckabschnitt (154) und eines oder beide von dem Basisabschnitt (152) und den elektrischen Kontakten (160) eine Druckkraft auf die Durchflusszellenvorrichtung ausüben, um die Durchflusszellenvorrichtung innerhalb des umschlossenen Raumes (156) zu sichern.

4. Durchflusszellensystem gemäß einem der Ansprüche 1-3, wobei die Durchflusszellenvorrichtung ferner eine Vielzahl von Kontaktflächen (34) beinhaltet, die sich über den Basiswaferabschnitt (14) erstrecken und die elektrisch mit der Vorrichtungsbeschaltung (24) gekoppelt sind und freiliegende Rückseitenoberflächen definieren, die Abschnitte der Rückseite der Durchflusszellenvorrichtung beinhalten,
und wobei die elektrischen Kontakte mit den Kontaktflächen (34) in Eingriff stehen; und, optional,
wobei die Kontaktflächen (34) elektrisch mit Durchkontaktierungen (28) der Vorrichtungsbeschaltung (24) gekoppelt sind, die sich durch den Basiswaferabschnitt (14) erstrecken.

5. Durchflusszellensystem gemäß Anspruch 4, wobei die Durchflusszellenvorrichtung ferner eine Stützschicht (30) beinhaltet, die sich über den Basiswaferabschnitt (14) erstreckt, und wobei sich die Stützschicht (30) an den freiliegenden Rückseitenoberflächen der Kontaktflächen (34) vorbei erstreckt.

6. Durchflusszellensystem gemäß einem der Ansprüche 1-3, wobei die Durchflusszellenvorrichtung (302) ferner einen Substratabschnitt (392) beinhaltet, der mit dem Basiswaferabschnitt (314), der die Rückseite der Durchflusszellenvorrichtung definiert, gekoppelt ist und sich über diesen erstreckt, wobei der Substratabschnitt (392) eine Vielzahl von elektrischen Leitungen (398) beinhaltet, die sich von der Rückseite der Durchflusszellenvorrichtung durch diesen hindurch erstrecken; und, optional, wobei die elektrischen Kontakte (360) mit den elektrischen Leitungen auf der Rückseite der Durchflusszellenvorrichtung in Eingriff stehen; und/oder die elektrischen Leitungen mit freiliegenden Kontaktoberflächen (376) der Vorrichtungsbeschaltung (324) an der Detektoroberfläche (22) oder einer lateralen Seite der Durchflusszellenvorrichtung elektrisch gekoppelt sind.

7. Durchflusszellensystem gemäß Anspruch 6, wobei die Durchflusszellenvorrichtung (302) ferner eine Vielzahl von elektrisch leitenden Drähten (399) beinhaltet, die zwischen die elektrischen Leitungen (398) und die freiliegenden Kontaktoberflächen (376) der Vorrichtungsbeschaltung (324) elektrisch gekoppelt sind.

8. Durchflusszellensystem gemäß Anspruch 6, wobei der Substratabschnitt (392) und die elektrischen Leitungen (398) eine gedruckte Leiterplatte beinhalten.

9. Durchflusszellensystem gemäß Anspruch 6, wobei die Durchflusszellenvorrichtung (302) ferner Seitenwandabschnitte (394) beinhaltet, die sich von dem Substratabschnitt (392) erstrecken, wobei der Substratabschnitt (392) und die Seitenwandabschnitte (394) einen Hohlraum (396) bilden und wobei die Lichtdetektionsvorrichtung (310) innerhalb des Hohlraums (396) positioniert ist; und, optional,
wobei der Substratabschnitt (392) und die Seitenwandabschnitte (394) eine Keramik beinhalten.

10. Durchflusszellensystem gemäß einem der Ansprüche 1-9, wobei sich ein offener Abschnitt des umschlossenen Raumes (56) über freiliegende laterale Seiten der Durchflusszellenvorrichtung erstreckt; und, optional,
wobei die freiliegenden lateralen Seiten der Durchflusszellenvorrichtung durch den Basiswaferabschnitt (14), die dielektrischen Schichten, die Reaktionsstruktur (20), die Vorrichtungsbeschaltung (24) der Lichtdetektionsvorrichtung (10) oder Kombinationen davon definiert sind; wobei bevorzugt die Lichtdetektionsvorrichtung (10) einen komplementären Metall-Oxid-Halbleiter(CMOS)-Lichtsensor (12) beinhaltet.

11. Ein System, das Folgendes beinhaltet:
das Durchflusszellensystem gemäß einem der Ansprüche 1-10; und
ein mit dem Durchflusszellensystem gekoppeltes Instrument (82), das mindestens eine dritte Öffnung (84) und eine Vielzahl von elektrischen Instrumentenkontakten beinhaltet, wobei die mindestens eine dritte Öffnung (84) des Instruments (82) mit der mindestens einen ersten Öffnung (70) der Aufnahme (50) in Kommunikation steht, um einen Durchfluss von Reaktionslösung in den Durchflusskanal (6) zu liefern, um eine Vielzahl von Reaktionsstellen auf der Detektoroberfläche (22) zu bilden, und
wobei die elektrischen Instrumentenkontakte mit den elektrischen Kontakten (60) der Aufnahme (50) in Eingriff stehen, um Datensignale zwischen der Vorrichtungsbeschaltung (24) der Lichtdetektionsvorrichtung (10) und dem Instrument (82) zu übertragen.

12. Ein Verfahren, das Folgendes beinhaltet:
Trennen einer Durchflusszellenvorrichtung (2) von einer Wafer-Level-Durchflusszellenstruktur (1), wobei die Wafer-Level-Durchflusszellenstruktur (1) eine Vielzahl von integralen Durchflusszellenvorrichtungen (2) beinhaltet, die auf einem gemeinsamen Basiswafer (14) positioniert sind, wobei die Durchflusszellenvorrichtungen (2) Folgendes beinhalten:
einen Abschnitt des Basiswafers (14);
eine Vielzahl von dielektrischen Schichten, die sich über den Abschnitt des Basiswafers (14) erstrecken;
eine Reaktionsstruktur (20), die sich über die dielektrischen Schichten erstreckt und die eine Detektoroberfläche (22) beinhaltet;
eine Vielzahl von Lichtsensoren (12), die innerhalb der dielektrischen Schichten positioniert sind;
Vorrichtungsbeschaltung (24), die sich durch die dielektrischen Schichten erstreckt und elektrisch mit den Lichtsensoren (12) gekoppelt ist, um Datensignale auf der Grundlage der von den Lichtsensoren (12) detektierten Photonen zu übertragen;
eine Vielzahl von Lichtleitern (18), die innerhalb der dielektrischen Schichten zwischen der Detektoroberfläche (22) und den Lichtsensoren (12) positioniert sind; und
einen Deckel (4), der sich über die Detektoroberfläche (22) mit einem Durchflusskanal (6) dazwischen erstreckt, wobei der Deckel (4) mindestens eine erste Öffnung (8) beinhaltet, die in Kommunikation mit dem Durchflusskanal (6) steht;
Positionieren der getrennten Durchflusszellenvorrichtung innerhalb eines Abschnitts eines umschlossenen Raumes (56) einer Aufnahme (50) über einen Basisabschnitt (52) derselben, sodass die Vorrichtungsbeschaltung (24) elektrisch mit elektrischen Kontakten (60) der Aufnahme (50) gekoppelt ist, die innerhalb des umschlossenen Raumes (56) positioniert sind und sich durch einen Abschnitt des Basisabschnitts (52) erstrecken; und
Koppeln eines Abdeckabschnitts (54) der Aufnahme mit dem Basisabschnitt (52) derselben, um die getrennte Durchflusszellenvorrichtung innerhalb des umschlossenen Raumes (56) der Aufnahme (50) zu sichern und mindestens eine zweite Öffnung des Abdeckabschnitts (54) in Kommunikation mit der mindestens einen Öffnung (70) der Durchflusszellenvorrichtung zu koppeln.

13. Verfahren gemäß Anspruch 12, wobei das Trennen der Durchflusszellenvorrichtung (2) von der Wafer-Level-Durchflusszellenstruktur (1) das Vereinzeln der Wafer-Level-Durchflusszellenstruktur (1) beinhaltet; und, optional,
wobei das Vereinzeln der Durchflusszellenvorrichtung (2) von der Wafer-Level-Durchflusszellenstruktur (1) laterale Seitenoberflächen der getrennten Durchflusszellenvorrichtung (2) bildet, die mindestens eines von dem Basiswafer (14), den dielektrischen Schichten, der Reaktionsstruktur (20), der Vorrichtungsbeschaltung (24) und dem Deckel (4) beinhalten, und wobei die lateralen Seitenoberflächen der Durchflusszellenvorrichtung (2) innerhalb des umschlossenen Raumes (56) freigelegt sind.

14. Verfahren gemäß einem der Ansprüche 12-13, wobei die Durchflusszellenvorrichtungen (2) ferner Kontaktflächen (34) beinhalten, die sich über eine Rückseite des Basiswafers (14) erstrecken und elektrisch mit Durchkontaktierungen (28) der Vorrichtungsbeschaltung (24) gekoppelt sind, die sich durch den Basiswafer (14) erstrecken, und wobei das Positionieren der getrennten Durchflusszellenvorrichtung (2) innerhalb eines Abschnitts des umschlossenen Raumes (56) der Aufnahme (50) das Eingreifen einer freiliegenden Oberfläche der Kontaktflächen (34) der getrennten Durchflusszellenvorrichtung (2) in die elektrischen Kontakte innerhalb des umschlossenen Raumes (56) beinhaltet.

15. Verfahren gemäß einem der Ansprüche 12-13, das ferner das Koppeln des Basiswaferabschnitts (314) der getrennten Durchflusszellenvorrichtung (302) mit einem Substrat (392) und das elektrische Koppeln der Vorrichtungsbeschaltung (324) der getrennten Durchflusszellenvorrichtung (302) mit elektrischen Leitungen (398) des Substrats (392) beinhaltet und wobei das Positionieren der getrennten Durchflusszellenvorrichtung (302) innerhalb eines Abschnitts des umschlossenen Raumes (356) der Aufnahme (350) das Positionieren der getrennten Durchflusszellenvorrichtung (302) und des Substrats (392) innerhalb des Abschnitts des umschlossenen Raumes (356) der Aufnahme (350) und das Eingreifen einer freiliegenden Oberfläche der elektrischen Leitungen des Substrats (392) in die elektrischen Kontakte (360) innerhalb des umschlossenen Raumes (356) beinhaltet.

## Revendications

1. Un système à cellule de flux (*flow cell*) (180), comprenant :
un réceptacle (150) comprenant une partie base (152), une pluralité de contacts électriques (160), et une partie couvercle (154) couplée à la partie base (152) comprenant au moins un premier orifice (170), la partie base (152) et la partie couvercle (154) formant en coopération une enceinte (156), les contacts électriques (160) s'étendant entre l'enceinte (156) et un côté externe de la partie base (152), et l'au moins un premier orifice (170) s'étendant entre l'enceinte (156) et un côté externe (164) de la partie couvercle (154) ; et
un dispositif cellule de flux (2) assujetti à l'intérieur de l'enceinte (156) du réceptacle (150), comprenant :
un dispositif de détection de lumière sans cadre (10) comprenant une partie tranche (*wafer*) de base (14), une pluralité de couches diélectriques s'étendant sur la partie tranche de base (14), une structure réactionnelle (20) s'étendant sur les couches diélectriques qui comprend une surface détectrice (22), une pluralité de capteurs de lumière (12), une circuiterie de dispositif (24) s'étendant à travers les couches diélectriques électriquement couplée aux capteurs de lumière (12) pour transmettre des signaux de données basés sur des photons détectés par les capteurs de lumière (12), et une pluralité de guides de lumière (18) associés aux capteurs de lumière (12) ; et un capot (4) s'étendant sur la surface détectrice (22) avec un canal d'écoulement (6) entre eux, le capot comprenant au moins un deuxième orifice (8) en communication avec le canal d'écoulement (6) et avec l'au moins un premier orifice (170) du réceptacle (150),
dans lequel la circuiterie de dispositif (24) du dispositif de détection de lumière (10) du dispositif cellule de flux est électriquement couplée aux contacts électriques (160) du réceptacle (150).

2. Le système à cellule de flux selon la revendication 1, dans lequel la partie couvercle (154) et la partie base (152) sont couplées de manière amovible, et dans lequel le dispositif cellule de flux (2) est assujetti de manière amovible à l'intérieur de l'enceinte (156).

3. Le système à cellule de flux selon la revendication 1 ou la revendication 2, dans lequel la partie couvercle (154) vient en contact avec le capot (4) du dispositif cellule de flux, et soit la partie base (152), soit les contacts électriques (160), soit les deux, viennent en contact avec un côté arrière du dispositif cellule de flux ; et facultativement dans lequel la partie couvercle (154) et soit la partie base (152), soit les contacts électriques (160), soit les deux, exercent une force de compression sur le dispositif cellule de flux pour assujettir le dispositif cellule de flux à l'intérieur de l'enceinte (156).

4. Le système à cellule de flux selon l'une quelconque des revendications 1 à 3, dans lequel le dispositif cellule de flux comprend en outre une pluralité de plots de contact (34) s'étendant sur la partie tranche de base (14) qui sont électriquement couplés à la circuiterie de dispositif (24) et définissent des surfaces arrière apparentes qui constituent des parties du côté arrière du dispositif cellule de flux, et dans lequel les contacts électriques viennent en contact avec les plots de contact (34) ; et
facultativement
dans lequel les plots de contact (34) sont électriquement couplés à des trous d'interconnexion (vias) (28) de la circuiterie de dispositif (24) qui s'étendent à travers la partie tranche de base (14).

5. Le système à cellule de flux selon la revendication 4, dans lequel le dispositif cellule de flux comprend en outre une couche de support (30) s'étendant sur la partie tranche de base (14), et dans lequel la couche de support (30) s'étend au-delà des surfaces arrière apparentes des plots de contact (34).

6. Le système à cellule de flux selon l'une quelconque des revendications 1 à 3, dans lequel le dispositif cellule de flux (302) comprend en outre une partie substrat (392) couplée à et s'étendant sur la partie tranche de base (314) qui définit le côté arrière du dispositif cellule de flux, dans lequel la partie substrat (392) comprend une pluralité de broches électriques (398) s'étendant à travers elle depuis le côté arrière du dispositif cellule de flux ; et facultativement
dans lequel les contacts électriques (360) viennent en contact avec les broches électriques au niveau du côté arrière du dispositif cellule de flux ; et/ou les broches électriques sont électriquement couplées à des surfaces de contact apparentes (376) de la circuiterie de dispositif (324) au niveau de la surface détectrice (22) ou d'un côté latéral du dispositif cellule de flux.

7. Le système à cellule de flux selon la revendication 6, dans lequel le dispositif cellule de flux (302) comprend en outre une pluralité de fils électriquement conducteurs (399) électriquement couplés entre les broches électriques (398) et les surfaces de contact apparentes (376) de la circuiterie de dispositif (324).

8. Le système à cellule de flux selon la revendication 6, dans lequel la partie substrat (392) et les broches électriques (398) constituent une carte à circuit imprimé.

9. Le système à cellule de flux de la revendication 6, dans lequel le dispositif cellule de flux (302) comprend en outre des parties parois de côté (394) s'étendant depuis la partie substrat (392), la partie substrat (392) et les parties parois de côté (394) formant une cavité (396), et dans lequel le dispositif de détection de lumière (310) est positionné à l'intérieur de la cavité (396) ; et facultativement dans lequel la partie substrat (392) et les parties parois de côté (394) comprennent une céramique.

10. Le système à cellule de flux selon l'une quelconque des revendications 1 à 9, dans lequel une partie ouverte de l'enceinte (56) s'étend autour de côtés latéraux apparents du dispositif cellule de flux ; et facultativement
dans lequel les côtés latéraux apparents du dispositif cellule de flux sont définis par la partie tranche de base (14), les couches diélectriques, la structure réactionnelle (20), la circuiterie de dispositif (24) du dispositif de détection de lumière (10), ou des combinaisons de ceux-ci ; dans lequel de préférence le dispositif de détection de lumière (10) comprend un capteur de lumière métal-oxyde-semi-conducteur complémentaire (CMOS) (12).

11. Un système, comprenant :
le système à cellule de flux selon l'une quelconque des revendications 1 à 10 ; et un instrument (82) couplé au système à cellule de flux comprenant au moins un troisième orifice (84) et une pluralité de contacts électriques d'instrument,
dans lequel l'au moins un troisième orifice (84) de l'instrument (82) est en communication avec l'au moins un premier orifice (70) du réceptacle (50) pour délivrer un écoulement de solution réactionnelle dans le canal d'écoulement (6) afin de former une pluralité de sites réactionnels sur la surface détectrice (22), et
dans lequel les contacts électriques d'instrument sont en contact avec les contacts électriques (60) du réceptacle (50) pour transmettre des signaux de données entre la circuiterie de dispositif (24) du dispositif de détection de lumière (10) et l'instrument (82).

12. Un procédé, comprenant :
la séparation d'un dispositif cellule de flux (2) à partir d'une structure de cellules de flux de niveau tranche (1), la structure de cellules de flux de niveau tranche (1) comprenant une pluralité de dispositifs cellules de flux (2) d'un seul tenant positionnés sur une tranche de base commune (14), les dispositifs cellules de flux (2) comprenant :
une partie de la tranche de base (14) ;
une pluralité de couches diélectriques s'étendant sur la partie de la tranche de base (14) ;
une structure réactionnelle (20) s'étendant sur les couches diélectriques qui comprend une surface détectrice (22) ;
une pluralité de capteurs de lumière (12) positionnés à l'intérieur des couches diélectriques,
une circuiterie de dispositif (24) s'étendant à travers les couches diélectriques électriquement couplée aux capteurs de lumière (12) pour transmettre des signaux de données basés sur des photons détectés par les capteurs de lumière (12) ;
une pluralité de guides de lumière (18) positionnés à l'intérieur des couches diélectriques entre la surface détectrice (22) et les capteurs de lumière (12) ; et un capot (4) s'étendant sur la surface détectrice (22) avec un canal d'écoulement (6) entre eux, le capot (4) comprenant au moins un premier orifice (8) en communication avec le canal d'écoulement (6) ;
le positionnement du dispositif cellule de flux séparé à l'intérieur d'une partie d'une enceinte (56) d'un réceptacle (50) sur une partie base (52) de celle-ci de telle sorte que la circuiterie de dispositif (24) soit électriquement couplée à des contacts électriques (60) du réceptacle (50) qui sont positionnés à l'intérieur de l'enceinte (56) et s'étendent à travers une partie de la partie base (52) ; et
le couplage d'une partie couvercle (54) du réceptacle à la partie base (52) de celle-ci pour assujettir le dispositif cellule de flux séparé à l'intérieur de l'enceinte (56) du réceptacle (50) et coupler au moins un deuxième orifice de la partie couvercle (54) en communication avec l'au moins un orifice (70) du dispositif cellule de flux.

13. Le procédé selon la revendication 12, dans lequel la séparation du dispositif cellule de flux (2) à partir de la structure de cellules de flux de niveau tranche (1) comprend le découpage en dés de la structure de cellules de flux de niveau tranche (1) ; et
facultativement
dans lequel le découpage en dés du dispositif cellule de flux (2) à partir de la structure de cellules de flux de niveau tranche (1) forme des surfaces de côté latéral du dispositif cellule de flux séparé (2) constituées d'au moins un élément parmi la tranche de base (14), les couches diélectriques, la structure réactionnelle (20), la circuiterie de dispositif (24) et le capot (4), et dans lequel les surfaces de côté latéral du dispositif cellule de flux (2) sont apparentes à l'intérieur de l'enceinte (56).

14. Le procédé selon l'une quelconque des revendications 12 à 13, dans lequel les dispositifs cellules de flux (2) comprennent en outre des plots de contact (34) s'étendant sur un côté arrière de la tranche de base (14) électriquement couplés à des trous d'interconnexion (28) de la circuiterie de dispositif (24) qui s'étendent à travers la tranche de base (14), et dans lequel le positionnement du dispositif cellule de flux séparé (2) à l'intérieur d'une partie de l'enceinte (56) du réceptacle (50) comprend la mise en contact d'une surface apparente des plots de contact (34) du dispositif cellule de flux séparé (2) avec les contacts électriques à l'intérieur de l'enceinte (56).

15. Le procédé selon l'une quelconque des revendications 12 à 13, comprenant en outre le couplage de la partie tranche de base (314) du dispositif cellule de flux séparé (302) à un substrat (392), et le couplage électrique de la circuiterie de dispositif (324) du dispositif cellule de flux séparé (302) à des broches électriques (398) du substrat (392), et dans lequel le positionnement du dispositif cellule de flux séparé (302) à l'intérieur d'une partie de l'enceinte (356) du réceptacle (350) comprend le positionnement du dispositif cellule de flux séparé (302) et du substrat (392) à l'intérieur de la partie de l'enceinte (356) du réceptacle (350) et la mise en contact d'une surface apparente des broches électriques du substrat (392) avec les contacts électriques (360) à l'intérieur de l'enceinte (356).
